(19) **Europäisches Patentamt**
**European Patent Office**
**Office européen des brevets**

(11) **EP 2 743 684 B1**

(12) **EUROPEAN PATENT SPECIFICATION**

(45) Date of publication and mention of the grant of the patent:
**06.09.2017 Bulletin 2017/36**

(21) Application number: **12824491.0**

(22) Date of filing: **02.07.2012**

(51) Int Cl.:
**G01N 21/64** (2006.01)    **G02B 21/00** (2006.01)

(86) International application number:
**PCT/JP2012/066875**

(87) International publication number:
**WO 2013/024637 (21.02.2013 Gazette 2013/08)**

(54) **METHOD FOR DETECTING FLUORESCENT PARTICLES**

VERFAHREN ZUM NACHWEIS VON FLUORESZENZPARTIKELN

PROCÉDÉ DE DÉTECTION DE PARTICULES FLUORESCENTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2011 JP 2011176699**

(43) Date of publication of application:
**18.06.2014 Bulletin 2014/25**

(73) Proprietor: **Olympus Corporation**
**Tokyo 192-8507 (JP)**

(72) Inventors:
• **NAKATA, Hidetaka**
**Hachioji-shi, Tokyo 192-8507 (JP)**
• **TANABE, Tetsuya**
**Hachioji-shi, Tokyo 192-8507 (JP)**

(74) Representative: **Schicker, Silvia**
**Wuesthoff & Wuesthoff**
**Patentanwälte PartG mbB**
**Schweigerstraße 2**
**81541 München (DE)**

(56) References cited:
| | |
|---|---|
| WO-A1-99/13110 | WO-A1-2011/108369 |
| WO-A1-2012/014778 | WO-A1-2012/014778 |
| JP-A- H03 504 765 | JP-A- S55 129 754 |
| JP-A- 2008 116 440 | JP-A- 2009 250 721 |
| JP-A- 2010 190 730 | JP-A- 2011 002 415 |
| JP-A- 2011 508 219 | US-A- 5 674 743 |
| US-A1- 2009 040 518 | US-A1- 2009 159 812 |
| US-A1- 2010 176 307 | US-A1- 2010 301 231 |

• **BENEDICT HEBERT ET AL: "Spatiotemporal Image Correlation Spectroscopy (STICS) Theory, Verification, and Application to Protein Velocity Mapping in Living CHO Cells", BIOPHYSICAL JOURNAL, vol. 88, no. 5, 1 May 2005 (2005-05-01), pages 3601-3614, XP055022727, ISSN: 0006-3495, DOI: 10.1529/biophysj.104.054874**

**Description**

TECHNICAL FIELD

The present invention relates to a method for detecting a fluorescent particle using an optical system capable of detecting light from a microregion in a solution, such as an optical system of a confocal microscope and multi-photon microscope.

BACKGROUND ART

Due to progress made in the field of optical measurement technology in recent years, it has become possible to detect and measure feint light at the level of a single photon or single fluorescent molecule using the optical system of a confocal microscope and ultra-high-sensitivity photodetection technology capable of performing photon counting (detecting a single photon). Therefore, various devices or methods have been proposed that detect interactions between molecules such as biomolecules or coupling and dissociation reactions between molecules using such feint light measurement technology. For example, in fluorescence correlation spectroscopy (FCS: see, for example, Patent Documents 1 and 2 and Non-Patent Documents 1 to 3), fluorescence intensity is measured from fluorescent molecules or fluorescent-labeled molecules entering and leaving a microregion in a sample solution using the optical system of a laser confocal microscope and photon counting technology. The average retention time (transitional diffusion time) of fluorescent molecules and the like in a microregion and the average value of the number of molecules remaining therein are determined from the value of an autocorrelation function of the measured fluorescence intensity. Acquisition of information such as the speed of movement, size or concentration of fluorescent molecules and the like in a microregion, or detection of various phenomena such as changes in molecular structure or size, molecule coupling and dissociation reactions or diffusion and aggregation, are achieved based on the average retention time or the average value of the number of molecules retained in the microregion. Furthermore, the aforementioned microregion refers to a confocal region where laser light of a microscope is focused, and is also referred to as confocal volume. In addition, in fluorescence intensity distribution analyses (FIDA: see, for example, Patent Document 3) and photon counting histograms (PCH: see, for example, Patent Document 4), a histogram is generated of the fluorescence intensity of fluorescent molecules and the like entering and leaving a measured confocal volume in the same manner as FCS, and by fitting a statistical model formula to the distribution of that histogram, the average value of the characteristic brightness of the fluorescent molecules and the like and the average value of the number of molecules remaining in the confocal volume are calculated. Changes in molecular structure or size, coupling and/or dissociation, dispersion or aggregation and the like are then estimated based on this information. Moreover, Patent Documents 5 and 6 propose a method for detecting a fluorescent substance based on the time lapse of a fluorescent signal of a sample solution measured using the optical system of a confocal microscope. Patent Document 7 proposes a signal arithmetic processing technology for detecting the presence of fluorescent fine particles in a flow or on a substrate by measuring feint light from fluorescent fine particles that have passed through a flow cytometer or fluorescent fine particles immobilized on a substrate using photon counting technology.

In particular, according to methods using microregion fluorescence measurement technology using the optical system of a confocal microscope and photon counting technology in the manner of FCS or FIDA and the like, the sample required for measurement is only required to be at an extremely low concentration and extremely small amount (since the amount used for a single measurement is roughly only several tens of microliters) and measurement time is shortened considerably (measurement of a duration on the order of several seconds for a single measurement is repeated several times) in comparison with that used in the past. Thus, these technologies are expected to be utilized as powerful tools that make it possible to carry out experimentation or testing less expensively and faster in comparison with conventional biochemical methods in the case of performing analyses on scarce or expensive samples frequently used in fields such as medical or biochemical research and development, or in the case of a large number of specimens such as when clinically diagnosing diseases or screening physiologically active substances.

Patent Document 8 teaches that, if an amount of photons detected is greater than a threshold level, the presence of a label is detected.

Prior Art Documents

Patent Documents

Patent Document 1: Japanese Unexamined Patent Application, First Publication No. 2005-098876

Patent Document 2: Japanese Unexamined Patent Application, First Publication No. 2008-292371
Patent Document 3: Japanese Patent (Granted) Publication No. 4023523
Patent Document 4: International Publication No. WO 2008-080417
Patent Document 5: Japanese Unexamined Patent Application, First Publication No. 2007-20565
Patent Document 6: Japanese Unexamined Patent Application, First Publication No. 2008-116440
Patent Document 7: Japanese Unexamined Patent Application, First Publication No. H4-337446
Patent Document 8: US 2009/159812 A1

Non-Patent Documents

Non-Patent Document 1: Kinjo, M., Proteins, Nucleic Acids and Enzymes, 1999, Vol. 44, No. 9, pp. 1431-1438
Non-Patent Document 2: Meyer-Alms, Fluorescence Correlation Spectroscopy, R. Rigler, ed., Springer, Berlin, 2000, pp. 204-224
Non-Patent Document 3: Katoh, N., et al., Gene and Medicine, 2002, Vol. 6, No. 2, pp. 271-277

## DISCLOSURE OF THE INVENTION

Problems to be Solved by the Invention

Generally speaking, in the case of optical analysis technologies such as the aforementioned FCS, FIDA or PCH, the magnitude of chronological fluctuations in measured fluorescence intensity is calculated by statistical processing, and various properties of fluorescent molecules and the like entering and leaving a microregion in a sample solution are determined based on the magnitude of those fluctuations . Thus, in order to obtain meaningful results using the aforementioned optical analysis technologies, the concentration or number density of fluorescent molecules and the like targeted for observation in a sample solution is preferably adjusted so that the number of fluorescent molecules and the like able to be statistically processed enter and leave a microregion within the duration of a single measurement having a length on the order of several seconds. Preferably, the concentration or number density of fluorescent molecules and the like targeted for observation in a sample solution is adjusted so that roughly only one fluorescent molecule and the like is present in the microregion at all times in an equilibrated state. Typically, the concentration of fluorescent molecules and the like is preferably about 1 nM or more since the volume of the confocal volume is about 1 fL. In other words, when the concentration or number density of target particles in a sample solution falls considerably below the degree that allows statistical processing thereof, such as when it falls considerably below 1 nM, a state occurs in which the observation target only rarely enters the microregion during the measurement time, thereby causing a state in which the observation target is not present at all in the microregion for a long period of time to be included in the measurement results of fluorescence intensity. In addition, since a meaningful amount of observed fluorescence intensity decreases, meaningful or highly accurate analysis results can no longer be expected with optical analysis technologies based on statistical fluctuations in fluorescence intensity as described above.

In the methods for detecting fluorescent substances using the optical system of a confocal microscope described in Patent Documents 5 and 6, instead of carrying out statistical processing relating to fluctuations in fluorescence intensity as described above, methods are disclosed that allow the presence or absence of an observation target in the form of fluorescent molecules and the like in a sample to be determined according to the presence or absence of the generation of a fluorescent signal of significant intensity during a measurement time extending for several seconds, thereby allowing the obtaining of a correlation between the frequency of the fluorescent signal of significant intensity and the number of observation targets in the form of fluorescent molecules and the like in the sample. In Patent Document 6 in particular, detection accuracy is suggested to be improved by generating a random flow in a sample solution by stirring. However, in these methods as well, detection is limited to the presence of fluorescent molecules and the like that statistically enter a microregion due to diffusion or random flow, and since the behavior of fluorescent molecules or other particles in the microregion cannot be determined, quantitatively calculating the concentration or number density of particles such as fluorescent molecules in a microregion, for example, is not achieved. In addition, the technology described in Patent Document 7 is a technology for individually detecting the presence of fluorescent fine particles flowing through a flow cytometer or immobilized on a substrate. The technology described in Patent Document 7 is not a technology for detecting molecules or colloidal particles and the like dissolved or dispersed in an ordinary state in a sample solution, namely particles randomly moving in a sample solution. Consequently, quantitative calculation of the concentration or number density of particles dissolved or dispersed in a sample solution is not achieved. In addition, since the technology of Patent Document 7 includes a process consisting of measuring in a flow cytometer or immobilizing fluorescent particles on a substrate, the amount of sample required for testing is much larger in comparison with the case of optical analysis technologies such as FCS, FIDA or PCH, and is thought to require the person performing testing to perform a complex and sophisticated procedure.

In this manner, an embodiment of the present invention does not include statistical processing like that carried out in optical analysis technologies such as FCS, FIDA or PCH. Thus, an object of the present invention is to provide a method for detecting fluorescent particles with higher sensitivity by using a novel optical analysis technology that allows detection of the status or properties of target particles in a sample solution in which the concentration or number density of the target particles is at a lower level than the level used in the aforementioned optical analysis technologies.

Means for Solving the Problems

As a result of conductive extensive studies to solve the aforementioned problems, the inventors of the present invention found that, detecting a fluorescent particle dispersed and moving randomly in a sample solution, by detecting the fluorescent particle using a scanning molecule counting method, a fluorescent particle can be detected with favorable sensitivity even in the case the concentration of the target particle in the sample solution is extremely low, and further that a fluorescent particle can be detected with even higher sensitivity by carrying out measurement according to the scanning molecule counting method in the presence of a triplet excited state quenching agent.

The present invention provides:

a method for detecting a fluorescent particle dispersed and moving randomly in a sample solution, comprising the features of claim 1. The method according to specific embodiments comprises the following enumerated additional features:

(2) the method for detecting a fluorescent particle described in (1) above, wherein the concentration of the substance that promotes the transition from an excited triple state to a singlet ground state in the sample solution is 0.1 mM to 20 mM;

(3) the method for detecting a fluorescent particle described in (1) above, wherein the concentration of the substance that promotes the transition from a triplet excited state to a singlet ground state in the sample solution is 0.3 mM to 10 mM;

(4) the method for detecting a fluorescent particle described in (1) above, wherein the concentration of the substance that promotes the transition from a triplet excited state to a singlet ground state in the sample solution is 0.5 mM to 5 mM;

(5) the method for detecting a fluorescent particle described in any of (1) to (4) above, wherein the substance that promotes the transition from a triplet excited state to a singlet ground state is one or more types selected from potassium iodide and cysteamine;

(6) the method for detecting a fluorescent particle described in any of (1) to (5) above, wherein the step for moving the location of the photodetection region comprises moving the location of the photodetection region at a prescribed speed;

(7) the method for detecting a fluorescent particle described in any of (1) to (6) above, wherein the step for moving the location of the photodetection region comprises moving the location of the photodetection region at a speed faster than a diffusion movement speed of the fluorescent particles.

The method for detecting a fluorescent particle, wherein in the step for individually detecting target particles by detecting a light signal from the individual fluorescent particles, the entry of a single fluorescent particle into the photo-detection region is detected based on the form of a detected chronological light signal.

Effects of the Invention

In the scanning molecule counting method used in the method for detecting a fluorescent particle of an embodiment of the present invention, statistical processing involving the calculation of fluctuations in fluorescence intensity is not carried out. Consequently, according to the method for detecting a fluorescent particle of the present invention, an analysis target in the form of a fluorescent particle in a sample can be detected even in cases in which the fluorescent particle is only present in an extremely small amount in the sample. Moreover, in the method for detecting a fluorescent particle of the present invention, a fluorescent particle can be detected with extremely high sensitivity by carrying out measurement according to a scanning molecule counting method in the presence of a triplet excited state quenching agent.

BRIEF DESCRIPTION OF THE DRAWINGS

FIG.1A is a schematic diagram of the internal structure of an optical analysis device for a scanning molecule counting method.

FIG. 1B is a schematic diagram of a confocal volume (observation region of a confocal microscope).

FIG. 1C is a schematic diagram of a mechanism for moving the location of a photodetection region in a sample solution by changing the orientation of a mirror 7.

FIG. 2A is a schematic diagram explaining the principle of photodetection using optical analysis technology for a scanning molecule counting method.

FIG. 2B is a schematic diagram of chronological changes in fluorescence intensity measured during photodetection using optical analysis technology for a scanning molecule counting method.

FIG. 3A is a model diagram of the case of target particles crossing a photodetection region while demonstrating Brownian movement.

FIG. 3B is a drawing showing an example of chronological changes in a photon count (light intensity) in the case target particles cross a photodetection region while demonstrating Brownian movement.

FIG. 4A is a model diagram of the case of target particles crossing a photodetection region by moving the location of the photodetection region in a sample solution at a speed faster than the diffusion movement speed of the target particles.

FIG. 4B is a drawing showing an example of chronological changes in photon count (light intensity) in the case target particles cross a photodetection region by moving the location of the photodetection region in a sample solution at a speed faster than the diffusion movement speed of the target particles.

FIG. 5 is a drawing indicating a processing procedure for counting particles based on chronological changes in a photon count (light intensity) measured according to a scanning molecule counting method in the form of a flow chart.

FIG. 6A is a drawing explaining an example of a signal processing step of a detection signal in a processing procedure for counting particles based on chronological changes in a photon count (light intensity) measured by a scanning molecule counting method.

FIG. 6B is a drawing explaining an example of a signal processing step of a detection signal in a processing procedure for counting particles based on chronological changes in a photon count (light intensity) measured by a scanning molecule counting method.

FIG. 7 indicates an example of actual measurements of photon counting data measured by a scanning molecule counting method (bar graph), a curve obtained by smoothing the data (dotted line), and a Gauss function fit to those regions where peaks are present (solid line) (in the drawing, signals indicated as being "noise" are ignored as signals attributable to noise or artifacts).

FIG. 8A is a drawing showing the percentages of a triplet excited state among fluorescent molecules in various sample solutions containing Rhodamine Green™ in Reference Example 1.

FIG. 8B is a drawing showing the amount of luminosity per molecule of fluorescent molecules in various sample solutions containing Rhodamine Green™ in Reference Example 1.

FIG. 9A is a drawing showing the percentages of a triplet excited state among fluorescent molecules in various sample solutions containing Rhodamine Green™ 488 in Reference Example 1.

FIG. 9B is a drawing showing the percentages of a triplet excited state among fluorescent molecules in various sample solutions containing Rhodamine Green™ 488 in Reference Example 1, and the amount of luminosity per molecule CPP of the fluorescent molecules.

FIG. 10A is a drawing showing the percentages of a triplet excited state among fluorescent molecules in various sample solutions containing Rhodamine Green™ 488 in Reference Example 2.

FIG. 10B is a drawing showing the amount of luminosity per molecule of fluorescent molecules in various sample solutions containing Rhodamine Green™ 488 in Reference Example 2.

FIG. 11A is a drawing showing the percentages of a triplet excited state among fluorescent molecules in various sample solutions containing TAMRA™ in Reference Example 2.

FIG. 11B is a drawing showing the amount of luminosity per molecule CPP of fluorescent molecules in various sample solutions containing TAMRA™ in Reference Example 2.

FIG. 12 is a drawing showing the results of counting the number of peaks of various sample solutions containing Alexa Fluor™ 488 in Example 1.

FIG. 13 is a drawing showing the results of counting the number of peaks of various sample solutions containing Alexa Fluor™ 488 in Example 2.

FIG. 14 is a drawing showing the results of counting the number of peaks of various sample solutions containing TAMRA™ in Example 2.

FIG. 15 is a drawing showing the results of counting the number of peaks of various sample solutions containing Alexa Fluor™ 488 at a concentration of 1 pM in Example 3.

FIG. 16 is a drawing showing the results of counting the number of peaks of various sample solutions containing Alexa Fluor™ 488 at a concentration of 100 pM in Example 3.

BEST MODE FOR CARRYING OUT THE INVENTION

An explanation is first provided of the scanning molecule counting method. The scanning molecule counting method consists of detecting light emitted from particles that emit light dispersed and moving randomly in a sample solution (to be referred to as "luminescent particles") present in a microregion when the luminescent particles cross through the microregion. As a result, the scanning molecule counting method makes it possible to acquire information relating counting of luminescent particles or the concentration or number density of luminescent particles in a sample solution by individually detecting each luminescent particle in the sample solution. It goes without saying that only an extremely small amount (for example, on the order of only several tens of microliters) of sample is required for measurement in the same manner as optical analysis technologies such as FIDA, and measurement time is short. Moreover, properties such as concentration or number density can be quantitatively detected for luminescent particles at a lower concentration or number density in comparison with the case of optical analysis technologies such as FIDA.

Furthermore, luminescent particles refer to particles that emit light by fluorescence, phosphorescence, chemiluminescence, bioluminescence or light scattering and the like. In the method used to detect fluorescent particles of the present invention, luminescent particles in the form of fluorescent particles are targeted for detection.

In the present invention, a "photodetection region" of a confocal microscope and multi-photon microscope refers to a microregion in which light is detected by a confocal microscope of multi-photon microscope, and in the case illumination light is reflected from an object lens, the region where that illumination light is focused corresponds to a microregion. Furthermore, this microregion is defined by the positional relationship between the object lens and pinhole in a confocal microscope in particular.

Light is successively detected while moving the location of the photodetection region in a sample solution, or in other words, while scanning the sample solution by photodetection regions. Whereupon, when the photodetection region being moved contains a luminescent probe bound to or associated with a randomly moving particle, light from the luminescent probe is detected. As a result, the presence of a single particle is detected. Depending on the mode of the experiment, the luminescent probe may also dissociate from the particle to be detected during detection of light after having bound to that particle. Light signals from the luminescent probe are individually detected in the successively detected light. As a result thereof, the presence of an individual particle or a particle bound to the luminescent probe is successively detected and various information relating to the state of the particle in the solution is acquired. More specifically, in the aforementioned configuration, the number of particles detected during movement of the location of the photodetection region may also be counted, for example, by counting individually detected particles (particle counting). According to this configuration, information relating to number density or concentration of particles in a sample solution is obtained by combining the number of particles and the amount of movement of the location of the photodetection region. In particular, particle number density or concentration can be specifically calculated by, for example, moving the location of the photodetection region at a prescribed speed by an arbitrary method, and specifying the total volume of the movement locus of the location of the photodetection region. Naturally, instead of determining absolute values for number density or concentration directly, a ratio of relative number density or concentration may also be calculated relative to a plurality of sample solutions or reference sample solution having a standard concentration or number density. In addition, in the scanning molecule counting method, by employing a configuration that allows the location of the photodetection region to be moved by changing the light path of the optical system, movement of the photodetection region is rapid, and mechanical vibrations or actions attributable to fluid dynamics do not substantially occur in the sample solution. Consequently, light can be measured with the particles targeted for detection in a stable state without being affected by dynamic action (if vibrations or flow act in the sample solution, the physical properties of the particles may change). Since it is also not necessary to provide a configuration that allows a sample solution to flow there through, measurements and analyses can be carried out on an extremely small amount of sample solution (on the order of one to several tens of microliters) in the same manner as in the case of FCS or FIDA and the like.

In the aforementioned step for individually detecting particles, a judgment as to whether or not a luminescent probe bound to a single particle has entered the photodetection region based on successively detected light signals may be carried out based on the form of a detected chronological light signal. In the present disclosure, the entry of a luminescent probe bound to a single particle into the photodetection region may be typically detected when a light signal has been detected that has intensity greater than a prescribed threshold value. Furthermore, in certain embodiments, a luminescent probe bound to a single particle includes the state in which a single luminescent probe is bound to a single particle, a state in which a plurality of luminescent probes are bound to a single particle, and a state in which a luminescent probe has dissociated from a particle after having bound to a single particle depending on the mode of the experiment.

In addition, in the aforementioned step for moving the location of the photodetection region, the movement speed of the location of the photodetection region in a sample solution may be suitably changed based on the properties of the luminescent probe bound to a particle or the number density or concentration thereof in a sample solution. As is understood by persons skilled in the art, the mode of light detected from a luminescent probe bound to a particle can be changed according to the properties thereof or the number density or concentration in a sample solution. In particular, since the amount of light obtained from a luminescent probe bound to a single particle decreases as the movement speed of the photodetection region increases, the movement speed of the photodetection region is preferably suitably changed so that light from the luminescent probe bound to a single particle can be measured with favorable accuracy and sensitivity.

Moreover, in the aforementioned step for moving the location of the photodetection region, the movement speed of the location of the photodetection region in a sample solution is preferably set to be faster than the diffusion movement speed (average speed of particles moving by Brownian movement) of the luminescent probe bound to a particle to be detected. As was previously explained, in the scanning molecule counting method, light emitted from a luminescent probe bound to a single particle is detected when a photodetection region has passed through a location where that luminescent probe is present, thereby resulting in individual detection of the luminescent probe. However, in the case the luminescent probe bound to a particle moves randomly through a solution by Brownian movement and enters and leaves the photodetection region a plurality of times, light signals (light signals indicating the presence of a particle desired to be detected) end up being detected a plurality of times from a single luminescent probe, thereby making it difficult to make a detected light signal correspond to the presence of a single particle desired to be detected. Therefore, as was previously described, the movement speed of the photodetection region is set to be faster than the diffusion movement speed of the luminescent probe bound to a particle, and as a result thereof, a luminescent probe bound to a single particle can be made to correspond to a single light signal (light signal representing the presence of a particle). More specifically, in certain embodiments, the movement speed of the photodetection region is set so as to a speed faster than the diffusion movement speed of a detection target in the form of a fluorescent particle. Furthermore, since diffusion movement speed varies according to the luminescent probe bound to a particle, the movement speed of the photodetection region is preferably suitably changed corresponding to the properties (and particularly, the diffusion constant) of the luminescent probe bound to a particle as previously described.

Changing of the light path of the optical system to move the location of the photodetection region may be carried out by an arbitrary method.

For example, the location of the photodetection region may be changed by changing the light path using a galvanometer mirror employed in laser scanning optical microscopes. The movement locus of the location of the photodetection region may be set arbitrarily, and for example, can be selected from among, for example, a circular, oval, rectangular, linear or curved locus.

In the scanning molecule counting method, since the photodetection mechanism per se is composed so as to detect light from a photodetection region of a confocal microscope or multi-photon microscope in the same manner as in the case of optical analysis technologies such as FIDA, the amount of sample solution may also be similarly an extremely small amount. However, in the scanning molecule counting method, since statistical processing involving calculation of fluctuations in fluorescent intensity and the like is not carried out, optical analysis technology employing the scanning molecule counting method can be applied to sample solutions in which the number density or concentration of particles is considerably lower than that required by optical analysis technologies such as FIDA.

In addition, in the scanning molecule counting method, each particle dispersed or dissolved in a solution is detected individually. Consequently, counting of particles, determination of particle concentration or number density in a sample solution, or acquisition of information relating to concentration or number density, can be carried out quantitatively using that information. Namely, according to the scanning molecule counting method, since particles are detected one at a time by creating a 1:1 correlation between a particle passing through a photodetection region and a detected light signal, particles dispersed and moving randomly in a solution can be counted. Thus, according to the scanning molecule counting method, the concentration or number density of particles in a sample solution can be determined more accurately than in the prior art. In actuality, according to the aforementioned method for detecting fluorescent particles of the present invention consisting of individually detecting fluorescent particles and then counting the number thereof to determine particle concentration, the fluorescent particles can be detected even if the concentration of fluorescent particles in a sample solution is lower than the concentration able to be determined based on fluorescence intensity as measured with a fluorescence spectrophotometer or plate reader.

Moreover, according to a mode in which a sample solution is scanned by photodetection regions by changing the light path of the optical system, the inside of the sample solution is observed uniformly or the sample solution is observed in a mechanically stable state without imparting mechanical vibrations or actions attributable to fluid dynamics to the sample solution. Consequently, the reliability of quantitative detection results is improved in comparison with the case of causing the generation of flow in a sample, and particles to be detected in a sample solution can be measured in a state that is free of effects caused by dynamic action and artifacts. Furthermore, in the case of imparting flow to a sample, in addition to it being difficult to impart a uniform flow at all times, the configuration of the device becomes complex. In addition, the amount of sample required increases considerably. Moreover, the particles in solution, luminescent probe, complex thereof or other substances may undergo deterioration or degeneration due to the fluid dynamic action generated by that flow.

<Configuration of Optical Analysis Device for Scanning Molecule Counting Method>

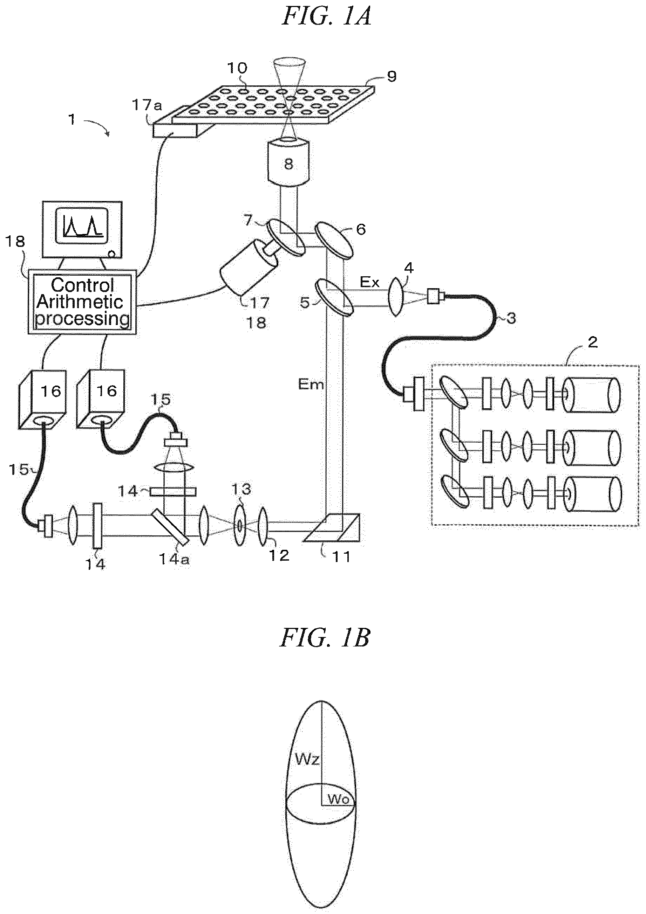

As schematically exemplified in FIG. 1A, the basic configuration of the scanning molecule counting method can be realized by an optical analysis device composed by combining the optical system of a confocal microscope capable of performing FCS or FIDA and the like with a photodetector. With reference to FIG. 1A, an optical analysis device 1 is composed of optical system components 2 to 17, and a computer 18 for controlling the operation of each component of the optical systems and acquiring and analyzing data. The optical system of the optical analysis device 1 may be composed in the same manner as the optical system of an ordinary confocal microscope, wherein laser light (Ex) that has propagated from a light source 2 through a single-mode optic fiber 3 is radiated in the form of light that is emitted at an angle determined according to a characteristic numerical aperture (NA) at the outgoing end of the fiber, the laser light is converted to parallel light by a collimator 4 and is reflected by a dichroic mirror 5 and reflecting mirrors 6 and 7, after which it enters an object lens 8. A microplate 9, in which are arranged sample containers or wells 10 into which are dispensed one to several tens of microliters of a sample solution, is typically arranged above the object lens 8. Laser light emitted from the object lens 8 is focused on the sample solution in the sample containers or wells 10, forming a region of high light intensity (excitation region). Target particles, a luminescent probe that binds to the particles, and typically a molecule having a luminescent label such as a fluorescent dye added thereto, are dispersed or dissolved in the sample solution. When a particle bound to or associated with the luminescent probe (or the luminescent probe may dissociate from the particle after having initially bound thereto depending on the mode of the experiment) enters the excitation region, the luminescent probe is excited and light is released during that time. The released light (Em) passes through the object lens 8 and dichroic mirror 5, is reflected by a mirror 11, is concentrated by a condenser lens 12 and then passes through a pinhole 13 followed by passing through a barrier filter 14 (here, only light components of a specific wavelength band are selected), after which the released light is introduced into a multi-mode optic fiber 15 and reaches a photodetector 16, and after being converted to a chronological electrical signal, is input to the computer 18 followed by undergoing processing for optical analysis by a mode to be subsequently explained. Furthermore, in the aforementioned configuration, the pinhole 13 is arranged at a location conjugate to the focal position of the object lens 8 as is known by persons skilled in the art. As a result, only light emitted from the focused region of the laser light as schematically shown in FIG. 1B, namely light emitted from the excitation region, passes through the pinhole 13, while light from a location other than the excitation region is blocked. The focused region of the laser light exemplified in FIG. 1B is normally a photodetection region in the present optical analysis device having an effective volume of about 1 fL to 10 fL, and is referred to as the confocal volume (and typically has a Gaussian distribution or Lorentzian distribution in which light intensity reaches a peak in the center of the region, and effective volume is the volume of a roughly ellipsoidal shape in which the boundary of light intensity is a plane defined as 1/e2). In addition, in the scanning molecule method, since light is detected from a complex consisting of a single particle and luminescent probe or a luminescent probe, such as feint light from one or a plurality of fluorescent dye molecules, an ultra-high-sensitivity photodetector capable of use in photon counting is preferably used for the photodetector 16. In addition, the stage of the microscope (not shown) may be provided with a stage position adjustment device 17a for moving the position of the microplate 9 in the horizontal direction in order to change the well 10 to be observed. Operation of the stage position adjustment device 17a may be controlled by the computer 18. As a result of employing this configuration, measurements can be carried out rapidly even in the case of multiple specimens.

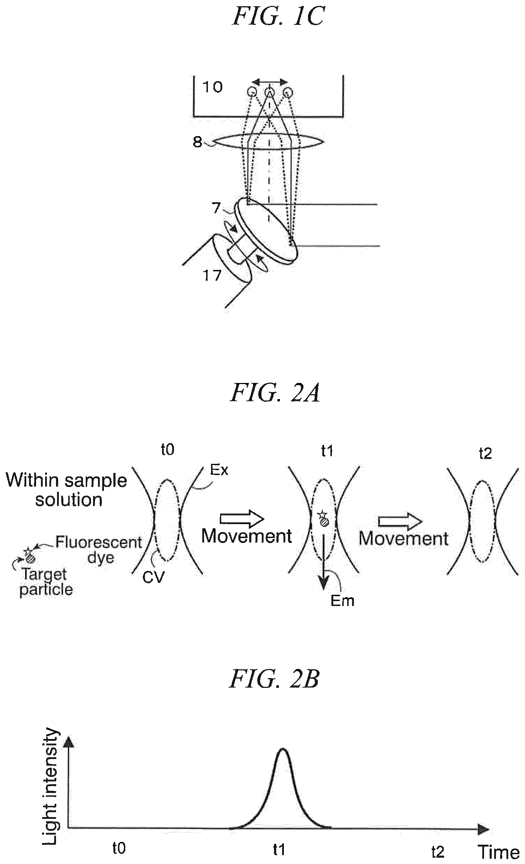

Moreover, in the optical system of the aforementioned optical analysis device, a mechanism is provided for scanning the sample solution by photodetection regions by changing the light path of the optical system, namely a mechanism is provided for moving the location of the focused region (photodetection region) in the sample solution. A mirror light deflector 17 that changes the orientation of the reflecting mirror 7, for example, may be employed as a mechanism for moving the location of the photodetection region in this manner as schematically exemplified in FIG. 1C. This mirror light deflector 17 may be composed in the same manner as a galvanometer mirror device provided in ordinary laser scanning optical microscopes. In addition, the mirror light defector 17 is driven in coordination with light detection by the photodetector 16 under the control of the computer 18 so as to achieve a desired movement pattern of the location of the photodetection region. The movement locus of the location of the photodetection region may be arbitrarily selected from among a circular, oval, rectangular, linear and curved locus or a combination thereof (and various movement patterns may be allowed to be selected by a program in the computer 18). Furthermore, although not shown in the drawings, the location of the photodetection region may be moved in the vertical direction by moving the object lens 8 up and down. As was previously described, according to a configuration that moves the location of the photodetection region by changing the light path of the optical system instead of a configuration that moves a sample solution, there is no substantial occurrence of mechanical vibrations or actions attributable to fluid dynamics in the sample solution, and the effects of dynamic action on an observation target can be eliminated, thereby achieving stable measurement.

In the case a conjugate of a particle and luminescent probe or a luminescent probe emits light as a result of multi-photon absorption, the aforementioned optical system is used in the form of a multi-photon microscope. In that case, since light is only released in the focused region of the excitation light (photodetection region), the pinhole 13 may be omitted. In addition, in the case a conjugate of a particle and luminescent probe or a luminescent probe emits light by chemiluminescence or bioluminescent phenomena without depending on excitation light, optical system components 2 to 5 for generating excitation light may be omitted. In the case a conjugate of a particle and luminescent probe or a luminescent probe emits light by phosphorescence or light scattering, the aforementioned optical system of a confocal microscope is used as is. Moreover, in the optical analysis device 1, a plurality of excitation light sources 2 are provided as shown in FIG. 1A, and these may be composed so as allow the wavelength of the excitation light to be suitably selected according to the wavelength of light that excites a conjugate of a particle and luminescent probe or a luminescent probe. Similarly, in the case a plurality of photodetectors 16 are provided and a plurality of types of conjugates of a particle and luminescent probe or a plurality of luminescent probes having different wavelengths are contained in a sample, the light emitted therefrom may be detected separately according to wavelength.

<Principle of Optical Analysis Technology of Scanning Molecule Counting Method>

In comparison with conventional biochemical analysis technologies, spectral analysis technologies such as FIDA are superior in that they require only an extremely small amount of sample and allow testing to be carried out rapidly. However, in the case of spectral analysis technologies such as FIDA, the concentration and properties of target particles are in principle determined based on fluctuations in fluorescence intensity. In order to obtain measurement results of favorable accuracy, the concentration or number density of target particles in a sample solution is required to be of a level such that roughly one target particle is present at all times in a photodetection region CV during measurement of fluorescence intensity, and that significant light intensity (photon count) be detected at all times during the measurement time. If the concentration or number density of the target particles is lower than that level, such as in the case of being at a level such that a target particle only occasionally enters the photodetection region CV, significant light intensity (photon count) only appears during a portion of the measurement time, thereby making it difficult to accurately determine fluctuations in light intensity. In addition, in the case the concentration of target particles is considerably lower than the level at which roughly one target particle is present in the photodetection region at all times during measurement, determination of fluctuations in light intensity are subject to background effects, thereby prolonging measurement time in order to obtain an adequate amount of significant light intensity data for making a determination. In contrast, in the scanning molecule counting method, the concentration, number density or other properties of target particles can be detected even in the case the concentration of target particles is lower than the level required by spectral analysis technologies such as FIDA.

In the optical analysis technology of the scanning molecule counting method, in plain terms, photodetection is carried out by changing the light path by driving a mechanism (mirror light defector 17) for moving the location of the photodetection region while moving the location of the photodetection region CV in a sample solution, or in other words, while scanning the interior of a sample solution by photodetection regions CV, as is schematically depicted in FIG. 2A.

This being the case, as shown in FIG. 2A, for example, when the optical analysis device passes a region in which a single particle (a luminescent probe in the form of a fluorescent dye is bound to the particle in the drawing) is present (tl) during the time the photodetection region CV moves (time t0 to t2 in the drawing), significant light intensity (Em) is detected as depicted in FIG. 2B. Thus, movement of the location of the photodetection region CV and photodetection are carried out as described above, and significant light intensity that appears during that time is individually detected as depicted in FIG. 2B. As a result, particles bound with a luminescent probe are individually detected, and by counting the number of those particles, the number of particles present in a measured region or information relating to concentration or number density can be acquired. In this principle of the optical analysis technology of the scanning molecule counting method, individual particles are detected without carrying out statistical arithmetic processing so as to calculate fluctuations in fluorescence intensity. As a result, it should be understood that information relating to particle concentration or number density can be acquired even in a sample solution in which the concentration of particles to be observed is so low that they cannot be analyzed by FIDA and the like with adequate accuracy.

In addition, according to a method by which particles in a sample solution are individually detected and counted as in the scanning molecule counting method, measurements can be carried out at a lower concentration than in the case of measuring the concentration of fluorescent-labeled particles based on fluorescence intensity measured with a fluorescence spectrophotometer or plate reader. In the case of measuring the concentration of certain fluorescent-labeled particles with a fluorescence spectrophotometer or plate reader, fluorescence intensity is normally assumed to be proportional to the concentration of the fluorescent-labeled particles. In this case, however, if the concentration of the fluorescent-labeled particles becomes low enough, the amount of noise increases relative to the size of the signal generated by light emitted from the fluorescent-labeled particles (resulting in a poor S/N ratio), and the proportional relationship between the concentration of fluorescent-labeled particles and light signal strength is disrupted. As a result, the accuracy of determined concentration values becomes poor. On the other hand, in the scanning molecule counting method, noise signals are excluded from the detection results, thereby enabling concentration to be determined by counting only those signals corresponding to individual particles. As a result, particles can be detected at a lower concentration than that in the case of detecting concentration based on the assumption of fluorescence intensity being proportional to the concentration of fluorescent-labeled particles.

Moreover, in the case a plurality of luminescent probes are bound to a single target particle, according to a method for individually detecting and counting particles in a sample solution in the manner of the scanning molecule counting method, particle concentration measurement accuracy improves for high particle concentrations to a greater degree than conventional methods consisting of determining concentration based on the assumption of fluorescence intensity being proportional to the concentration of fluorescent-labeled particles. In the case a plurality of luminescent probes are bound to a single target particle, when a certain amount of luminescent probe is added to the sample solution, the number of luminescent probes that bind to the particles undergoes a relative decrease as the concentration of target particles increases. In this case, since the amount of fluorescence intensity per single target particle decreases, the proportional relationship between the concentration of fluorescent-labeled particles and the amount of light is disrupted, and accuracy of determined concentration values becomes poor. On the other hand, in the scanning molecule counting method, in the step for detecting signals corresponding to individual particles from detected light signals, concentration is determined based on the number of particles with little effect of reductions in fluorescence intensity per particle. Consequently, particles can be detected at higher concentrations than in the case of detecting concentration based on the assumption that fluorescence intensity is proportional to the concentration of fluorescent-labeled particles.

<Measurement of Light Intensity of Sample Solution by Scanning Molecule Counting Method>

Measurement of light intensity in optical analyses using the scanning molecule counting method may also be carried out by a mode similar to the fluorescence intensity measurement step of FCS or FIDA with the exception of moving the location of a photodetection region in a sample solution (scanning the interior of the sample solution) by driving the mirror light deflector 17 during measurement. During operational processing, sample solution is typically injected into the wells 10 of the microplate 9, and after placing the microplate 9 on the microscope stage, a user inputs instructions for starting measurement to the computer 18. Continuing, the computer 18 initiates radiation of excitation light and measurement of light intensity in a photodetection region in the sample solution in accordance with a program (consisting of a procedure for changing the light path so as to move the location of the photodetection region in the sample solution and a procedure for detecting light from the photodetection region during movement of the location of the photodetection region) stored in a memory device (not shown). During this measurement, the mirror light deflector 17 drives the mirror 7 (galvanometer mirror) under the control of a processing operation in accordance with the program of the computer 18, and the location of the photodetection region is moved in the wells 10. At the same time, the photodetector 16 converts successively detected light to electrical signals and transmits those signals to the computer 18. In the computer 18, chronological light intensity data is generated from the transmitted light signals and stored therein. Furthermore, the photodetector 16 is typically an ultra-high-sensitivity photodetector capable of detecting the arrival of a single photon. Accordingly, light detection is in the form of photon counting that is carried out in a mode in which the number of photons arriving at the photodetector in a prescribed unit time period (bin time), such as every 10 μs, is successively measured over a prescribed amount of time, and chronological light intensity data is in the form of chronological photon count data.

The movement speed when moving the location of the photodetection region during measurement of light intensity may be an arbitrary speed, and for example, may be a prescribed speed set experimentally or so as to comply with the analysis objective. In the case of acquiring information relating to particle number density or concentration based on the number of target particles detected, the region through which the photodetection region passes is required to have a certain size or volume. Consequently, the location of the photodetection region is moved by a mode that allows movement distance to be determined. Furthermore, the presence of a proportional relationship between elapsed time during measurement and movement distance of the location of the photodetection region facilitates interpretation of measurement results. Accordingly, although movement speed is basically made to preferably be a constant speed, it is not limited thereto.

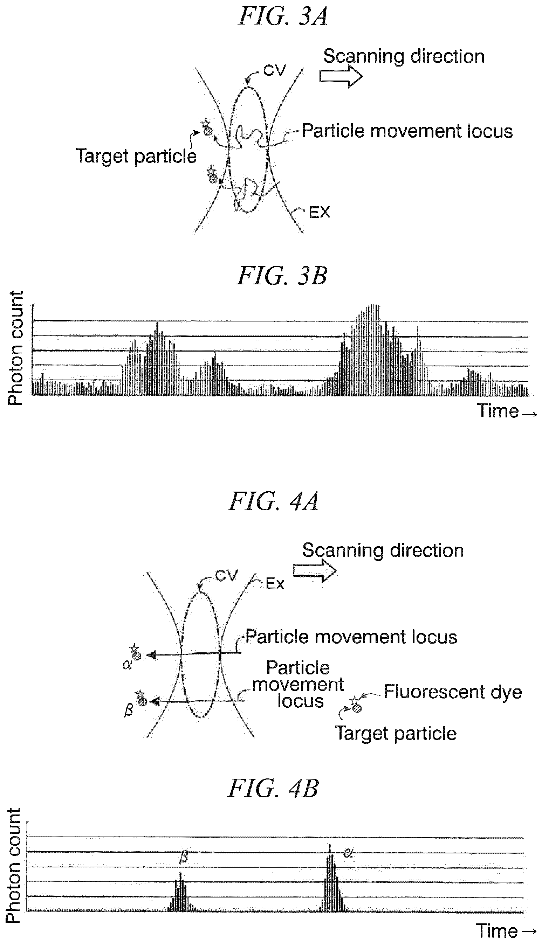

However, in order to quantitatively and accurately detect individual target particles or count the number of target particles based on measured chronological light intensity data, the movement speed of the location of the photodetection region is preferably set to value that is faster than the random movement speed of the target particles (and more precisely, conjugates of particles and luminescent probe or luminescent probe that has degraded and been released after binding with the particles, and in the present invention, fluorescent particles), or in other words, a speed faster than movement speed attributable to Brownian movement. Since target particles in an optical analysis technology using the scanning molecule counting method are particles that are dispersed or dissolved in a solution and randomly move about freely therein, their locations move over time due to Brownian movement. Thus, in the case movement speed of the location of the photodetection region is slower than movement attributable to Brownian movement, particles randomly move through the region as schematically depicted in FIG. 3A. As a result, light intensity changes randomly as depicted in FIG. 3B (and as was previously mentioned, excitation light intensity in a photodetection region has a peak in the center of the region and then decreases moving to either side), and it becomes difficult to specify significant changes in light intensity corresponding to individual target particles.

Therefore, the movement speed of the location of the photodetection region is preferably set to be faster than the average movement speed attributable to Brownian movement (diffusion movement speed) so that particles cross the photodetection region in nearly a straight line as depicted in FIG. 4A. As a result, a profile of the change in light intensity corresponding to individual particles becomes nearly uniform as exemplified in FIG. 4B in the chronological light intensity data, and a correlation between individual target particles and light intensity can be easily determined. In the case particles cross the photodetection region in nearly a straight line, the profile of changes in light intensity is roughly the same as the distribution of excitation light intensity.

More specifically, a time $\Delta t$ required for a target particle having a diffusion coefficient D (and more precisely, a conjugate of a particle and luminescent probe or a luminescent probe that has been degraded and released after binding with the particle) to pass through a photodetection region (confocal volume) having a radius Wo by Brownian movement can be determined from the following relational expression of mean square displacement:

$$(2Wo)^2 = 6D \cdot \Delta t \qquad (1)$$

to be

$$\Delta t = (2Wo)^2/6D \qquad (2)$$

Thus, the speed at which the target particles move by Brownian movement (diffusion movement speed) Vdif can generally be expressed as follows:

$$Vdif = 2Wo/\Delta t = 3D/Wo \qquad (3)$$

Therefore, the movement speed of the location of the photodetection region is set to a value that is sufficiently faster than that speed by referring to Vdif. For example, in the case the diffusion coefficient D of a target particle is predicted to be about $2.0 \times 10^{-10}$ m²/s, if Wo is about 0.62 $\mu$m, then Vdif becomes $1.0 \times 10^{-3}$ m/s. Consequently, the movement speed of the location of the photodetection region is set to a value of 15 mm/s, which is about 10 times greater than that. Furthermore, in the case the diffusion coefficient of a target particle is unknown, a preferable movement speed of the location of the photodetection region is determined by repeatedly carrying out preliminary experiments in order to find those conditions under which the prolife of changes in light intensity become the predicted profile (and typically, a prolife that is roughly the same as the excitation light distribution) by trying various settings for the movement speed of the location of the photodetection region.

<Analysis of Light Intensity by Scanning Molecule Counting Method>

Once chronological light intensity data of a sample solution has been obtained according to the aforementioned processing, the computer 18 analyzes light intensity in the manner described below by carrying out processing in accordance with a program stored in a memory device (consisting of a procedure for individually detecting light signals corresponding to individual luminescent particles from detected light).

(i) Detection of Single Target particle

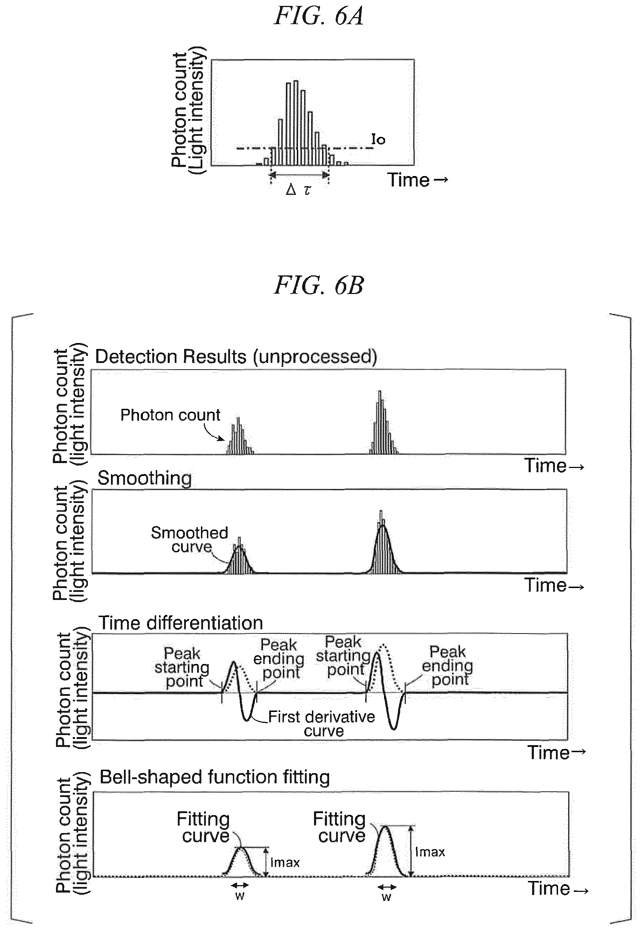

In chronological light intensity data, in the case the locus when a single target particle passes through a photodetection region is roughly linear in the manner shown in FIG. 4A, the change in light intensity corresponding to that particle has a profile (which is normally roughly bell-shaped) that reflects the distribution of light intensity in the photodetection region (determined according to the optical system) as schematically depicted in FIG. 6A. Therefore, in one technique for detecting target particles, a threshold value Io is set for light intensity, and when a duration $\Delta\tau$ during which

light intensity continuously exceeds that threshold value is within a prescribed range, that profile of light intensity is judged to correspond to the passage of a single particle through the photodetection region, and that single target particle is detected. The threshold value Io for light intensity and the prescribed range of duration $\Delta\tau$ are determined based on a profile presumed to be the intensity of light emitted from a conjugate of an target particle and luminescent probe (or a luminescent probe that has been degraded and separated after binding with that particle) that moves at a prescribed speed relative to the photodetection region. Those specific values may be arbitrarily set experimentally, or may be selectively determined according to the properties of the conjugate of the target particle and luminescent probe (or a luminescent probe that has been degraded and separated from the particle).

In addition, in another technique for detecting target particles, when the distribution of light intensity of a photodetection region is assumed to be a Gaussian distribution as indicated below:

$$I = A \cdot \exp(-2t^2/a^2) \qquad (4)$$

the profile of that light intensity is judged to correspond to the passage of a single target particle through the photodetection region and a single target particle is detected; when intensity A and width a as determined by fitting equation (4) to a profile of significant light intensity (profile able to be clearly determined to not be background) are within prescribed ranges. The profile is ignored during analysis as constituting noise or artifact when intensity A and width a are outside the prescribed ranges.

(ii) Counting of Target particles

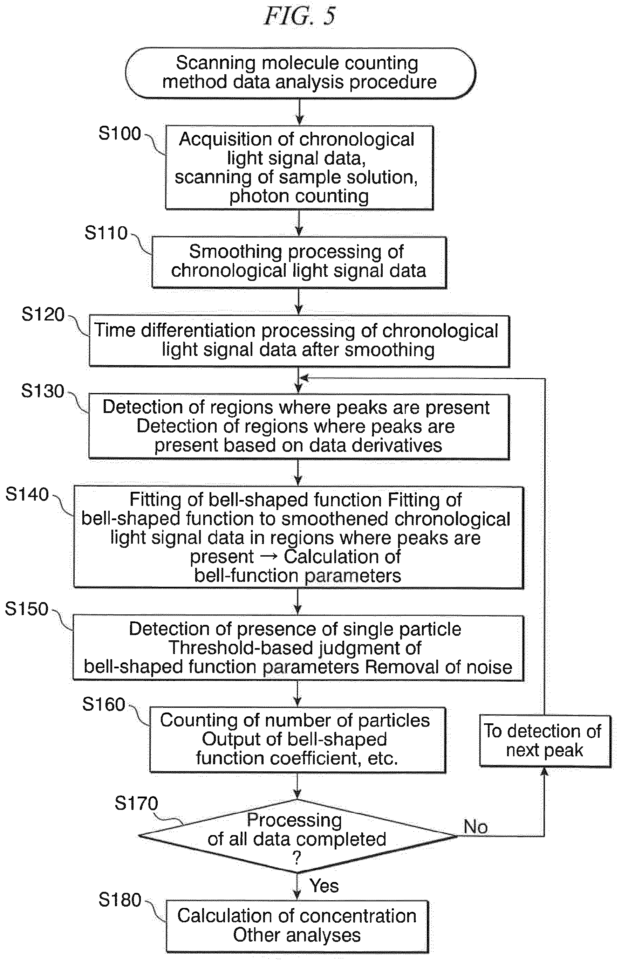

Counting of target particles is carried out by counting the number of particles detected according to the aforementioned techniques for detecting target particles by an arbitrary method. However, in the case of a large number of particles, counting may be carried out according to processing exemplified in FIGS. 5 and 6B.

With reference to FIGS. 5 and 6B, one example of a method for counting particles from chronological light intensity (photon count) data consists of measuring light intensity as explained above. Namely, chronological light signal data (photon count data) is acquired by carrying out scanning of a sample solution by photodetection regions and counting the number of photons (Step 100) . Smoothing processing (Step 110, "Smoothing" in the second graph from the top in FIG. 6B) is then carried out on the chronological light signal data ("Detection result (unprocessed)" in the top graph of FIG. 6B). Light emitted from conjugates of the particles and luminescent probe or that emitted from the luminescent probe is released statistically, thereby resulting in the possibility of omission of data values for minute time periods. Consequently, this smoothing processing makes it possible to ignore omission of data values as described above. Smoothing processing is carried out by, for example, the moving average method. Furthermore, parameters used when carrying out smoothing processing, such as the number of data points averaged at one time or the number of times movement is averaged in the case of the moving average method, are suitably set corresponding to the movement speed of the location of the photodetection region when acquiring light intensity data (scanning speed) and bin time.

Next, in order to detect a time region in which a significant signal is present (peak region) in chronological light signal data following smoothing processing, a first derivative is calculated for the time of the chronological light signal data following smoothing processing (Step 120). The change in the time derivative of chronological light signal data increases at the inflection point of the signal value as exemplified by "Time differentiation" in the second graph from the bottom in FIG. 6B. Consequently, the starting point and ending point of a significant signal (peak signal) can be advantageously determined by referring to this time derivative.

Subsequently, significant signals (peak signals) are successively detected in the chronological light signal data, and a judgment is made as to whether or not the detected peak signals are signals corresponding to target particles.

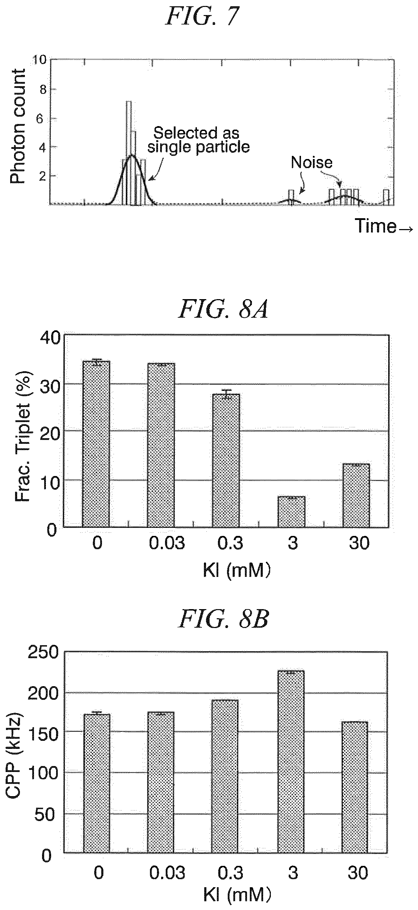

More specifically, a peak region is identified by seeking and determining the starting point and ending point of a single peak signal by successively referring to time derivatives in the chronological time-differentiated data of the chronological light signal data (Step 130) . Once a single peak region has been identified, a bell-shaped function is fit to the smoothened chronological light signal data in that peak region (Bell-shaped function fitting" in the bottom graph of FIG. 6B) . As a result, parameters such as peak intensity Imax of the bell-shaped function, peak width (full width at half maximum) w and correlation coefficient (of the least squares method) during fitting are calculated (Step 140) . Furthermore, although the bell-shaped function subjected to fitting is typically a Gaussian function, it may also be a Lorentzian function. A judgment is then made as to whether or not the calculated bell-shaped function parameters are within a presumed range for the parameters of a bell-shaped profile depicted by a light signal detected when a single conjugate of a particle and luminescent probe or luminescent probe has passed through a photodetection region, namely whether or not peak intensity, peak width and correlation coefficient are each within a prescribed range (Step 150). Thus, in the case of a signal for which calculated bell-shaped function parameters have been judged to be within the presumed range for a light signal corresponding to a single conjugate of a particle and luminescent probe or luminescent probe as indicated on the left side of the graph of FIG. 7, that signal is judged to be a signal corresponding to a single target particle. As a result, a single target particle is judged to have been detected and that a target particle is counted as a single particle (and the particle count is incremented by 1, Step 160). On the other hand, peak signals in which the calculated bell-shaped function parameters are not within the presumed range as indicated on the right side of the graph of FIG. 7 are ignored as constituting noise.

The searching and discrimination of peak signals in the aforementioned processing of steps 130 to 160 are carried out repeatedly for the entire range of chronological light signal data, and each time a single target particle is detected, that a target particle is counted as a particle. When searching for peak signals throughout the entire range of chronological light signal data has been completed (Step 170), the particle count value obtained up to that time is taken to be the number of target particles detected in the chronological light signal data.

(iii) Determination of Number Density and Concentration of Target particles

When target particles are counted, the number density or concentration of the target particles is determined using the total volume of the photodetection region traversed by the target particles during acquisition of chronological light signal data. However, since the effective volume of the photodetection region fluctuates dependent upon the wavelength of the excitation light or detection light, numerical aperture of the lens, and adjusted state of the optical system, it is generally difficult to determine the number density or concentration of target particles from design values. Thus, it is not easy to determine the total volume of the traversed region of a photodetection region. Therefore, light intensity is typically measured and particles are detected and counted as previously explained for a solution having a known particle concentration (reference solution) under the same conditions as those used when measuring a sample solution to be tested, and the total volume of the traversed photodetection region, namely the relationship between the detected number and concentration of target particles, is determined from the number of detected particles and the particle concentration of the reference solution.

The particles of the reference solution preferably consist of a fluorescent label (such as a fluorescent dye) having emission properties similar to conjugates of particles and luminescent probe formed by the target particles (or luminescent probe that has separated after binding with the target particles). More specifically, when assuming a number of detected particles N for a reference solution having a particle concentration C, for example, then the total volume $V_t$ of the traversed region of the photodetection region is given by the following equation:

$$V_t = N/C \tag{5}$$

In addition, a plurality of solutions having different concentrations may be provided for use as reference solutions, measurements may be carried out on each reference solution, and the average value of the calculated $V_t$ of each may be used as the total volume $V_t$ of the traversed region of the photodetection region. If $V_t$ is given, then the number density c of particles in a sample solution for which the result of particle counting is n is given by the following equation:

$$c = n/V_t \tag{6}$$

Furthermore, determination of the volume of a photodetection region or the total volume of the traversed photodetection region is not limited to the aforementioned method, but rather may also be obtained by an arbitrary method such as FCS or FIDA. In addition, the optical analysis device of the present invention may preliminarily store information on the relationship between concentration C and particle count N (Equation (5)) for various standard particles and for presumed photodetection region movement patterns in a memory device of the computer 18, and may be configured so that a device user is able to use that suitably stored relationship information when performing optical analyses.

<Fluorescent Particle Detection Method>

The method for detecting a fluorescent particle of the present invention is a method for detecting a fluorescent particle dispersed and randomly moving in a sample solution, wherein the fluorescent particle is detected by counting according to the scanning molecule counting method in the presence of a substance that promotes transition of the fluorescent particles from a triplet excited state to a singlet ground state. Since the scanning molecule counting method is a measurement method that enables luminescent particles to be measured one particle at a time while molecules are in a discrete state, measurements can be carried out on luminescent particles at a comparatively low concentration on the pM order or lower. Consequently, even in cases in which the concentration of fluorescent particles targeted for analysis in a sample solution is extremely low, the method for detecting fluorescent particles of the present invention can be used to count fluorescent particles with high sensitivity. Moreover, the method for detecting a fluorescent particle of the present invention is capable of detecting a fluorescent particle with extremely high sensitivity by measuring according to the scanning molecule counting method in the presence of a substance that promotes transition from a triplet excited state to a singlet ground state (triplet excited state quenching agent).

When molecules in a ground state are irradiated with light, the molecules enter a singlet excited state after which they again return to the ground state. There are two paths by which molecules return to the ground state from the singlet excited state. The first is a path by which molecules return directly to the ground state from the singlet excited state, and the light released at this time is fluorescent light. The other path is a path by which molecules return to the ground state from the singlet excited state by going through a triplet excited state, and fluorescence is not emitted from molecules that return to the ground state by the aforementioned path. The lifetime of the fluorescent light is known to be on the nanosecond order for most molecules. On the other hand, the duration of the path by which molecules return to the ground state from the singlet excited state by going through a triplet excited state (without emitting fluorescent light) is generally on the microsecond order.

In other words, from the viewpoint of emission of fluorescent light, waste results due to a portion of the molecules excited to the singlet excited state returning to the ground state by going through the triplet excited state.

In the present invention, a triplet excited state quenching agent improves fluorescent brightness by utilizing the fact that it collides more frequently with molecules in the triplet excited state than molecules in the singlet excited state due to differences in length between lifetime of the singlet excited state and lifetime of the triplet excited state. More specifically, as a result of measuring according to the scanning molecule counting method in the presence of a triplet excited state quenching agent, fluorescent particles in the triplet excited state present in a sample solution are returned to the ground state by the triplet excited state quenching agent. Fluorescent particles returned to the ground state are again excited to the singlet excited state when irradiated with light. Namely, as a result of rapidly eliminating the triplet excited state that does result in emission of fluorescent light, fluorescent brightness can be improved, thereby making it possible to detect fluorescent particles with higher sensitivity.

There are no particular limitations on the triplet excited state quenching agent used in the present invention provided it is a substance that has an action that returns molecules in the triplet excited state to the ground state. The triplet excited state quenching agent is used by suitably selecting from among known triplet excited state quenching agents in consideration of such factors as the type of fluorescent particles, wavelength of the excitation light, and wavelength of the fluorescent light. Examples of triplet excited state quenching agents include potassium iodide (KI), cysteamine (also known as 2-aminoethanethiol) and cyclooctatetraene. In the present invention, potassium iodide and cysteamine are used preferably. Furthermore, one type of triplet excited state quenching agent may be used alone or two or more types may be used in combination.

When detecting fluorescent particles, for example, in the case the fluorescence detection wavelengths include at least a portion of the wavelength range of 510 nm to 560 nm, one or more types of triplet excited state quenching agents selected from among potassium iodide and cysteamine are preferably used for the triplet excited state quenching agent. In the case the fluorescence detection wavelengths during detection of fluorescent particles include at least a portion of the wavelength range of 510 nm to 620 nm, cysteamine is preferably used for the triplet excited state quenching agent. Examples of fluorescent particles for which the fluorescence wavelength includes at a least a portion of the wavelength range of 510 nm to 560 nm include fluorescent substances such as Rhodamine Green™, Alexa Fluor™ 488, fluorescein, FITC, 5-carboxyfluorescein (5-FAM) or Cy2™, and particles in which these fluorescent substances are bound thereto. Examples of fluorescent particles for which the fluorescence wavelength includes at least a portion of the wavelength range of 560 nm to 620 nm include fluorescent substances such as TAMRA™, Rhodamine, Cy3™, Alexa Fluor™ 546 or Alexa Fluor™ 555, and particles in which these fluorescent substances are bound thereto.

More specifically, a method for quantitative determination of a target particle of the present invention includes the following steps (a) and (b):

(a) a step for preparing a sample solution containing fluorescent particles and a substance that promotes transition of the fluorescent particles from a triplet excited state to a singlet ground state, and
(b) a step for calculating the number of molecules of fluorescent particles present in the sample solution prepared in step (a).

The following provides an explanation of each step.

In the present invention, "a particle dispersed and moving randomly in a sample solution" refer to a particle such as an atom, a molecule or an aggregates thereof dispersed or dissolved in a sample solution (and may be a particle that emits light or a particle that does not emit light) that moves about freely by Brownian movement in a solution without being immobilized on a substrate and the like.

There are no particular limitations on the fluorescent particles targeted for detection with the method for detecting a fluorescent particle of the present invention provided they are a substance that releases fluorescent light as a result of being irradiated with light of a specific wavelength, and examples thereof include fluorescent substances such as fluorescent dyes or quantum dots. In addition, the method for detecting a fluorescent particle of the present invention is also able to detect a non-fluorescent substance by using a fluorescent probe. More specifically, a fluorescent probe is used that has a site that specifically or non-specifically binds or adsorbs to a detection target in the form of a target particle (non-fluorescent substance) and emits fluorescence when bound to the target particle. The fluorescent probe and target particle are bound by adding the fluorescent probe to a sample solution containing the target particle. The formed fluorescent probe bound with the target particle is a fluorescent particle, and can be detected by the method for detecting a fluorescent particle of the present invention.

Target particles refer to particles that are dispersed and moving randomly in a sample solution, and examples thereof include biomolecules such as proteins, peptides, nucleic acids, nucleic acid-like substances, lipids, saccharides, amino acids or aggregates thereof, particulate biological targets such as viruses or bacteria, and non-biological particles (such as atoms, molecules, micelles or metal colloids). Nucleic acids may be DNA or RNA, or may be artificially amplified substances in the manner of cDNA. Examples of nucleic acid-like substances include substances in which side chains and the like of naturally-occurring nucleotides in the manner of DNA or RNA (nucleotides present in nature) have been modified by functional groups such as an amino group, and substances that have been labeled with a protein or low molecular weight compound and the like. Specific examples of nucleic acid-like substances include bridged nucleic acids (BNA), nucleotides in which an oxygen atom at position 4' of a naturally-occurring nucleotide has been substituted with a sulfur atom, nucleotides in which a hydroxyl group at position 2' of a naturally-occurring nucleotide has been substituted with a methoxy group, hexitol nucleic acids (HNA) and peptide nucleic acids (PNA).

A fluorescent probe that binds with a target particle is preferably a substance in which luminescence properties of the released light differ between the state in which it is bound to a target particle and the state in which it is present alone. A fluorescent probe having different luminescence properties between the state in which it is bound to a target particle and the state in which it is present alone means that the intensity of light of specific wavelength differs between the state in which it is bound to a target particle and the state in which it is present alone. Differing the intensity of a light of a specific wavelength between the state in which the fluorescent probe is bound to a target particle and the state in which it is present alone (such as differing in fluorescence intensity) makes it possible to distinguish between the two during detection according to the scanning molecule counting method.

For example, in the case the target particle is a nucleic acid or nucleic acid-like substance, examples of the fluorescent probe include that in which a fluorescent substance is bound to an oligonucleotide that hybridizes with the target particle, a nucleic acid-binding protein bound with a fluorescent substance, and a fluorescent dye molecule that binds to nucleic acid. The aforementioned oligonucleotide may be DNA, RNA or an artificially amplified substance in the manner of cDNA, or a substance that contains a portion or all of a nucleic acid-like substance capable of forming a nucleotide chain and base pairs in the same manner as naturally-occurring nucleic acid bases.

In addition, in the case the target particle is a protein, a substance obtained by labeling an antigen or antibody to the target particle or a ligand or receptor of the target particle with a fluorescent substance can be used as a fluorescent probe. Furthermore, binding of a fluorescent substance to a substance that specifically or non-specifically binds or absorbs to a target particle such as a nucleic acid or protein can be carried out by ordinary methods.

Although the fluorescent probe that binds to a target particle may be that which non-specifically binds to a target particle, from the viewpoint of accuracy of detection and quantitative determination of target particles, a fluorescent probe that binds specifically is preferable. Furthermore, the fluorescent probe that specifically binds to a target particle is only required to be that which preferentially binds to the target particle rather than binding to other substances having physical or chemical properties similar to those of the target particle, and is not required to be that which does not bind at all to substances other than the target particle. For example, in the case the target particle is a nucleic acid, an oligonucleotide labeled with a fluorescent substance used as a fluorescent probe may have a base sequence that is completely complementary to the base sequence of the target particle, or may have a base sequence that contains mismatches with the base sequence of the target particle.

In the case the target particle is a protein, a dye (such as a fluorescent dye in the manner of hydrophobic probes ANS, MANS and TNS) that undergoes a change in fluorescence intensity or fluorescence wavelength due to a change in the ambient environment as a result of binding with the protein can be used as a fluorescent probe. In addition, the fluorescent probe per se is not necessarily required to emit fluorescent light. For example, in the case the target particle is a nucleic acid or nucleic acid-like substance, by using an oligonucleotide that hybridizes with the target particle as a fluorescent probe, even if a fluorescent double-stranded nucleic acid-like substance is added that specifically binds to a double-stranded structure, luminescence properties can be made to differ between the state in which the fluorescent probe is present alone and the state in which the fluorescent probe is bound to the target particle. Examples of fluorescent double-stranded nucleic acid-like substances that specifically bind to a double-stranded structure include fluorescent intercalators and groove binders bound to a fluorescent substance.

In addition, substances composed of at least two constituents that emit fluorescence due a mutual positional change in at least two of the aforementioned constituents as a result of binding to a target particle may also be employed as fluorescent probes. Examples of such substances include fluorescent proteins that undergo a structural change and release strong fluorescence when binding to a certain particle, and molecules that aggregate and form a fluorescent metal complex when binding to a certain molecule (complex ligands). According to this type of configuration, since a fluorescent probe alone or a fluorescent probe that does not bind to a target particle either does not emit hardly any light, or even if it emits light, since the wavelength differs from that of a conjugate of the target particle and fluorescent probe, light from the conjugate of the target particle and fluorescent probe can be detected selectively.

In addition, luminescence properties can also be made to differ between a fluorescent probe present alone in a sample solution and a fluorescent probe in a state of being bound to a target particle by using fluorescence resonance energy transfer (FRET). For example, a fluorescent substance serving as an energy donor in FRET and a fluorescent substance serving as an energy acceptor (fluorescent substance and quenching substance) can be used as substances that bind to a target particle, and a substance for which FRET occurs in a state in which a fluorescent probe is present alone but for which FRET is not allowed to occur in the state of being bound to the target particle can be used as a fluorescent probe. Since FRET does not occur in the fluorescent probe bound to the target particle, fluorescence is released from the fluorescent substance serving as the energy donor. On the other hand, fluorescence released from the fluorescent substance serving as the energy donor is either not detected from the fluorescent probe present alone or that fluorescence is weak. Therefore, by detecting fluorescence released from the fluorescent substance serving as the energy donor, a target particle bound to the fluorescent probe can be distinguished from the fluorescent probe present alone and thereby detected.

For example, in the case the target particle is a nucleic acid or nucleic acid-like substance, a fluorescent substance serving as an energy donor in FRET and a substance serving as an energy acceptor can be preferably used as oligonucleotides that form an intramolecular structure when in the state of a single-stranded nucleic acid molecule, and a molecular beacon probe bound such that FRET occurs when in the state of a single-stranded nucleic acid molecule, but does not occur when in the state of an association product formed by hybridizing with another single-stranded nucleic acid molecule, can be preferably used as a fluorescent probe. In certain embodiments, a substance is preferably used that has a fluorescent substance serving as an energy donor or a substance serving as an energy acceptor bound to the 3'-terminal side with the remaining other of the pair bound to the 5'-terminal side, has base sequences that are mutually complementary to the region of the 3'-terminal side and 5'-terminal side, and forms an intramolecular structure (a so-called stem-loop structure) by forming base pairs in these base sequences. Furthermore, the mutually complementary regions that form the intramolecular base pairs of the molecular beacon probe are present so as to interpose a region that hybridizes with a target particle, and the region on the 3'-terminal side and the region on the 5'-terminal side may be regions that respectively contain the 3'-terminal or 5'-terminal or regions that do not. In addition, the number of bases and base sequence of the regions that form the base pairs are to such a degree that the stability of the formed base pairs is lower than the stability of the association product with the target particle and base pairs can be formed under the measurement conditions.

In addition, a fluorescent probe present alone can also be distinguished from a fluorescent probe bound to a target particle by using a fluorescent double-stranded nucleic acid-binding substance that specifically binds to a double-stranded structure and inducing FRET between the fluorescent double-stranded nucleic acid-binding substance and a fluorescent substance labeled with the fluorescent probe. Namely, one of either a fluorescent double-stranded nucleic acid-binding substance or a fluorescent substance labeled with the fluorescent probe serves as a FRET energy donor while the other serves as a FRET energy acceptor. Fluorescence released from the fluorescent substance used to label the fluorescent probe is detected from the fluorescent probe present alone. In contrast, since the fluorescent double-stranded nucleic acid-binding substance binds to the fluorescent probe bound to a target particle, fluorescent released by FRET is detected from the conjugate thereof, and as a result thereof, the conjugate can be distinguished from the fluorescent probe present alone, thereby enabling its detection.

Furthermore, in the case the amount of a fluorescent intercalator inserted between the base pairs of the association product of the fluorescent probe and target particle is excessively large, the background level when detecting fluorescence released by FRET becomes excessively high, thereby resulting in the risk of having an effect on detection accuracy. Consequently, the fluorescent probe is preferably designed so that the region that forms a double-strand in the association product of the fluorescent probe and target particle is 400 bp or less.

In addition, two types of fluorescent probes may also be used in the present invention. For example, in the case the target particle is a nucleic acid or nucleic acid-like substance, two types of fluorescent probes are designed so as to hybridize mutually adjacent to a target particle, one of the fluorescent probes is labeled with a fluorescent substance serving as an energy donor in FRET, while the other fluorescent probe is labeled with a substance serving as an energy acceptor in FRET. In this case, although FRET does not occur in the case the fluorescent probes are present alone, the two types of fluorescent probes are mutually brought into close proximity thereby resulting in the occurrence of FRET as a result of binding to the target particle. Consequently, the target particle bound to the fluorescent probe can be detected by detecting fluorescence released by FRET.

First, in step (a), a sample solution is prepared that contains fluorescent particles and a fluorescent probe that binds to a triplet excited state quenching agent that acts on the fluorescent particles. More specifically, the sample solution is prepared by adding the fluorescent particles and triplet excited state quenching agent to a suitable solvent. There are no particular limitations on the solvent provided it does not impair detection of light released from the fluorescent particles or detection of the fluorescent probe according to the scanning molecule counting method, and can be used by suitably selecting from among buffers commonly used in the aforementioned technical field. Examples of these buffers include phosphate buffers such as phosphate-buffered saline (PBS, pH 7.4) and Tris buffers.

The triplet excited state quenching agent is added to the sample solution at a concentration sufficient for demonstrating action that returns molecules from the triplet excited state to the ground state. The concentration at which quenching action is demonstrated can be determined experimentally. More specifically, the triplet excited state quenching agent is added at various concentrations to a measurement solution containing a prescribed amount of fluorescent particles (which may be particles containing the same type of fluorescent substance as the fluorescent particles targeted for detection) followed by measuring the percentage of molecules in the triplet excited state in the fluorescent probes of each measurement solution. The concentration at which the percentage of molecules in the triplet excited state is significantly lower than that of a measurement solution to which the triplet excited state quenching agent has not been added is the concentration at which quenching action is demonstrated by the aforementioned triplet excited state quenching agent. The percentage of molecules in the triplet excited state can be determined by FCS measurement.

More specifically, in the case of using potassium iodide or cysteamine as a triplet excited state quenching agent, the concentration of the triplet excited state quenching agent during measurement by the scanning molecule counting method is preferably 0.1 mM to 20 mM, more preferably 0.3 mM to 10 mM, and even more preferably 0 . 5 mM to 5 mM. In the case of combining the use of potassium iodide and cysteamine, the combined concentration of both is preferably within the aforementioned ranges.

In the case of using a conjugate of a non-fluorescent target particle and fluorescent probe as a fluorescent particle targeted for detection, a sample solution may be prepared by adding a triplet excited state quenching agent to a solution containing fluorescent particles obtained by preliminarily binding target particles and a fluorescent probe. In addition, fluorescent particles may also be formed by preparing a sample solution obtained by adding target particles, fluorescent probe and triplet excited state quenching agent, followed by binding the target particles and fluorescent probe in the aforementioned sample solution.

In the case of being able to bind fluorescent particles and fluorescent probe by only allowing the target particles and fluorescent probe to be present in the same solution, the target particles and fluorescent probe can be bound in the aforementioned sample solution simply by incubating the aforementioned sample solution for a prescribed amount of time as necessary.

On the other hand, in the case the target particles and fluorescent probe are nucleic acids or nucleic acid-like substances having a double-stranded structure, the target particles and luminescent probe are preferably associated after having denatured the nucleic acid and the like in the sample solution. Furthermore, "denaturing a nucleic acid molecule or nucleic acid-like substance" refers to dissociation of base pairs. For example, this refers to dissociating base pairs formed by mutually complementary base sequences in a molecular beacon probe to disassemble an intramolecular structure and form a single-stranded structure, or converting a double-stranded nucleic acid molecule into a single-stranded nucleic acid molecule. In the case the fluorescent probe is an oligonucleotide containing a nucleic acid-like substance such as PNA, there are cases in which an association product consisting of the fluorescent probe and target particle can be formed without having to carry out special denaturation treatment even if the target particle was in the form of a double-stranded nucleic acid molecule.

Examples of denaturation treatment include denaturation by high-temperature treatment (heat denaturation) and denaturation by low salt concentration treatment. In particular, heat denaturation is preferable since its effect on fluorescent substances is comparatively low and the procedure is simple. More specifically, in the case of heat denaturation, nucleic acids and the like in the aforementioned sample solution are denatured by subjecting the sample solution to high-temperature treatment. In general, although denaturation can be carried out by holding at a temperature of 90°C for DNA or 70°C for RNA for several seconds to about 2 minutes, since the denaturing temperature varies considerably according to the base length of the target particle and the like, the temperature is not limited thereto provided denaturation is possible at that temperature. On the other hand, denaturation by low salt concentration treatment can be carried out by, for example, adjusting the salt concentration of the aforementioned sample solution to be sufficiently low by diluting with purified water and the like.

After having carried out denaturation as necessary, the target particles and fluorescent probe in the aforementioned sample solution are allowed to associate.

In the case of having carried out heat denaturation, the target particles and fluorescent probe in the sample solution can be suitably allowed to associate by lowering the temperature of the aforementioned sample solution to a temperature that allows specific hybridization between the target particles and fluorescent probe. In addition, in the case of having carried out denaturation by low salt concentration treatment, the target particles and fluorescent probe in the sample solution can be suitably allowed to associate by raising the salt concentration of the aforementioned sample solution to a concentration that allows specific hybridization between the target particles and fluorescent probe.

Furthermore, the temperature at which two single-stranded nucleic acid molecules are able to specifically hybridize can be determined from a melting curve of an association product of the target particles and fluorescent probe. A melting curve can be determined by, for example, changing the temperature of a solution containing only the target particles and fluorescent probe from a high temperature to a low temperature, and measuring optical absorbance or fluorescence intensity of the aforementioned solution. The temperature range from the temperature at which the two denatured single-stranded nucleic acid molecules begin to form an association product to the temperature at which the nucleic acid molecules have nearly completely formed an association product can be taken to be the temperature at which both specifically hybridize as determined from the melting curve. The concentration at which two single-stranded nucleic acid molecules specifically hybridize can be determined by similarly determining a melting curve by changing the salt concentration in the solution from a low concentration to a high concentration instead of changing the temperature.

The temperature at which two single-stranded nucleic acid molecules specifically hybridize can generally be substituted for the Tm value (melting temperature). For example, the Tm value of a region of a fluorescent probe that hybridizes with a target particle (temperature at which 50% of double-stranded DNA dissociates to single-stranded DNA) can be calculated from base sequence information of the fluorescent probe by using commonly used primer/probe design software and the like.

In addition, in order to suppress non-specific hybridization, the temperature of the sample solution is preferably lowered comparatively slowly when forming an association product. For example, after having denatured nucleic acid molecules by making the temperature of a sample solution to be 70°C or higher, the liquid temperature of the aforementioned sample solution can be lowered at a temperature lowering rate of 0.05°C/second or higher.

In addition, in order to suppress non-specific hybridization, surfactant, formamide, dimethylsulfoxide or urea and the like is preferably added to the sample solution in advance. Only one type of these compounds may be added or two or more types may be added in combination. The addition of these compounds makes it possible to suppress the occurrence of non-specific hybridization in a comparatively low temperature environment.

Subsequently, in step (b), the number of molecules of fluorescent particles present in the prepared sample solution is calculated. More specifically, a sample solution containing fluorescent particles and a triplet excited state quenching agent is placed in the aforementioned optical analysis device for use with the scanning molecule counting method, and by detecting and analyzing light released from the fluorescent particles according to the aforementioned procedure, the number of fluorescent particles is counted. The counted number of particles is the number of fluorescent particles contained in the measurement solution.

Examples

Although the following provides a more detailed explanation of the present invention by indicating examples and the like thereof, the present invention is not limited to the following examples.

[Reference Example 1]

Potassium iodide (KI) was confirmed to have quenching action by FCS measurement.

<Case of Rhodamine Green™>

Potassium iodide (KI) was confirmed to have quenching action on Rhodamine Green™ by FCS measurement.

More specifically, sample solutions were prepared by adding KI to Rhodamine Green™ (AnaSpec Inc.) to final concentrations of 0 mM, 0.03 mM, 0.3 mM, 3 mM and 30 mM. FCS measurement was carried out on each sample solution using the MF20 Single Molecule Fluorescence Spectroscopy System (Olympus Corp.) capable of measuring fluorescence intensity per molecule and the percentage of molecules in the triplet excited state. FCS measurement conditions consisted of an excitation wavelength of 488 nm, laser intensity of 1 mW, and measuring time of 10 seconds. Measurements were carried out five times on each sample followed by calculation of the mean and standard deviation thereof.

The measurement results are shown in FIGS. 8A and 8B. FIG. 8A is a drawing showing the percentages of Rhodamine Green molecules in the triplet excited state in each sample solution (Frac. Triplet (%)). FIG. 8B is a drawing showing the amount of luminosity per molecule (count rate per particle, CPP) of Rhodamine Green in each sample solution. As shown in FIG. 8A, the percentage of molecules in the triplet excited state was lowest in the sample solution having a KI concentration of 3 mM. On the basis of this result, KI was able to be confirmed to act as a triplet excited state quenching agent on Rhodamine Green. In addition, in the sample solution having a KI concentration of 3 mM, CPP demonstrated luminosity roughly 1.3 times greater in comparison with the sample solution to which KI was not added (see FIG. 8B) . On the basis of this finding, fluorescence brightness was confirmed to improve by adding triplet excited state quenching agent. On the other hand, in the sample solution having a KI concentration of 30 mM, although the percentage of molecules in the triplet excited state was lower than the sample solution to which KI was not added, there was hardly any change in CPP. This is presumed to be because the frequency at which KI came in close proximity to the fluorescent dye increased due to addition of KI at a high concentration, thereby causing even those molecules in the singlet excited state to return to the ground state.

<Case of Alexa Fluor™ 488>

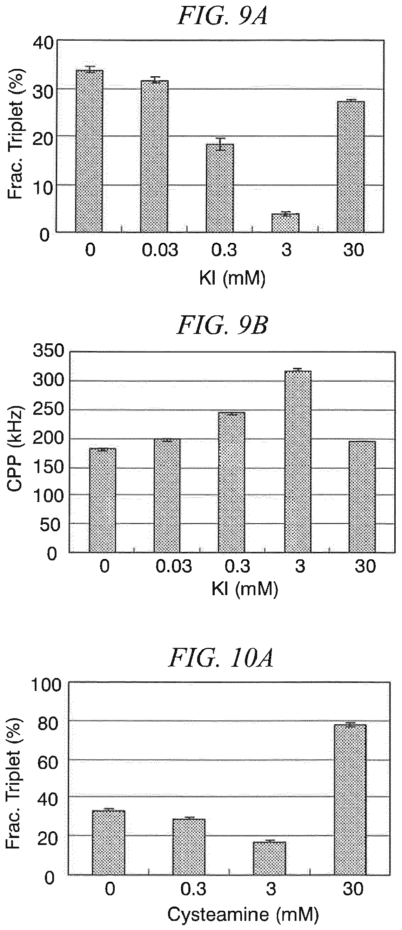

Potassium iodide (KI) was confirmed to have quenching action on Alexa Fluor™ 488 by FCS measurement.
More specifically, FCS measurements were carried out on sample solutions containing Alexa Fluor™ 488 to which KI had been added to final concentrations of 0 mM, 0.03 mM, 0.3 mM, 3 mM and 30 mM in the same manner as in the case of Rhodamine Green™ with the exception of using Alexa Fluor™ 488 (Invitrogen Corp.) instead of Rhodamine Green™ (AnaSpec Inc.).
The measurement results are shown in FIGS. 9A and 9B. FIG. 9A is a drawing showing the percentages of Alexa Fluor 488 molecules in the triplet excited state in each sample solution. FIG. 9B is a drawing showing the amount of luminosity per molecule (CPP) of Alexa Fluor 488 in each sample solution. As shown in FIG. 9A, the percentages of molecules in the triplet excited state were clearly lower in the sample solutions having KI concentrations of 0 . 3 mM and 3 mM in comparison with the sample solution to which KI was not added. On the basis of this result, KI was able to be confirmed to act as a triplet excited state quenching agent on Alexa Fluor 488. In addition, in the sample solution having a KI concentration of 3 mM that demonstrated the lowest percentage of molecules in the triplet excited state, CPP demonstrated luminosity roughly 1.8 times greater in comparison with the sample solution to which KI was not added, thereby demonstrating an extremely potent effect (see FIG. 9B) .
On the basis of these results, KI was able to be confirmed to have quenching action on various fluorescent substances, and demonstrate an effect that improves fluorescence brightness.

[Reference Example 2]

Cysteamine was confirmed to have quenching action by FCS measurement.

<Case of Alexa Fluor™ 488>

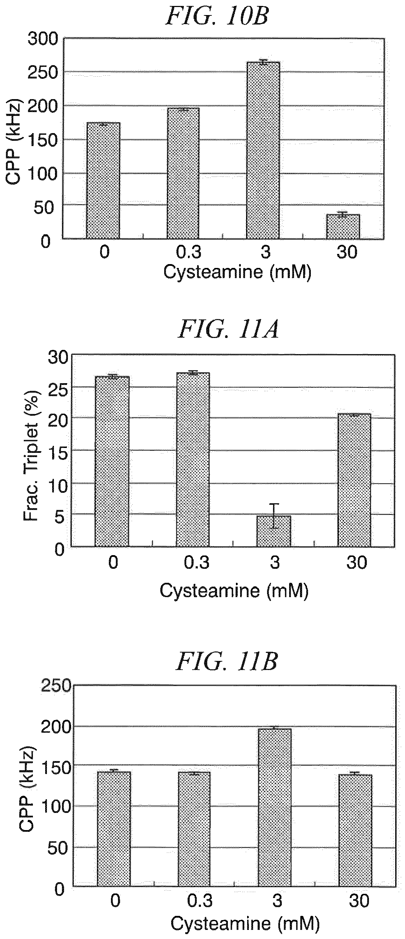

Cysteamine was confirmed to have quenching action on Alexa Fluor™ 488 by FCS measurement.
More specifically, sample solutions were prepared by adding cysteamine (Sigma GmbH) to Alexa Fluor™ 488 (Invitrogen Corp.) to final concentrations of 0 mM, 0.3 mM, 3 mM and 30 mM. FCS measurement was carried out on each sample solution using the MF20 Single Molecule Fluorescence Spectroscopy System (Olympus Corp.). FCS measurement conditions consisted of an excitation wavelength of 488 nm, laser intensity of 1 mW, and measuring time of 10 seconds. Measurements were carried out five times on each sample followed by calculation of the mean thereof.
The measurement results are shown in FIGS. 10A and 10B. FIG. 10A is a drawing showing the percentages of Alexa Fluor 488 molecules in the triplet excited state in each sample solution. FIG. 10B is a drawing showing the amount of luminosity per molecule (CPP) of Alexa Fluor 488 in each sample solution. As shown in FIG. 10A, the percentage of molecules in the triplet excited state was lowest in the sample solution having a cysteamine concentration of 3 mM. On the basis of this result, cysteamine was able to be confirmed to act as a triplet excited state quenching agent on Alexa Fluor 488. In addition, in the sample solution having a cysteamine concentration of 3 mM, CPP demonstrated luminosity roughly 1. 5 times greater in comparison with the sample solution to which cysteamine was not added (see FIG. 10B). On the basis of this finding, fluorescence brightness was confirmed to improve by adding cysteamine.

<Case of TAMRA™>

Cysteamine was confirmed to have quenching action on TAMRA™ by FCS measurement.
More specifically, sample solutions were prepared by adding cysteamine (Sigma GmbH) to 1 nM TAMRA™ (AnaSpec Inc.) to final concentrations of 0 mM, 0. 3 mM, 3 mM and 30 mM. FCS measurement was carried out on each sample solution using the MF20 Single Molecule Fluorescence Spectroscopy System (Olympus Corp.). FCS measurement conditions consisted of an excitation wavelength of 543 nm, laser intensity of 0.5 mW, and measuring time of 10 seconds. Measurements were carried out five times on each sample followed by calculation of the mean thereof.
The measurement results are shown in FIGS. 11A and 11B. FIG. 11A is a drawing showing the percentages of TAMRA molecules in the triplet excited state in each sample solution. FIG. 11B is a drawing showing the amount of luminosity per molecule (CPP) of TAMRA in each sample solution. As shown in FIG. 11A, the percentage of molecules in the triplet excited state was the lowest in the sample solution having a cysteamine concentration of 3 mM. On the basis of this result, cysteamine was able to be confirmed to act as a triplet excited state quenching agent on TAMRA. In addition, in the sample solution having a cysteamine concentration of 3 mM, CPP demonstrated luminosity roughly 1. 4 times greater in comparison with the sample solution to which cysteamine was not added (see FIG. 11B) . On the basis of this finding, fluorescence brightness was confirmed to improve by adding cysteamine.

On the basis of these results, cysteamine was able to be confirmed to have quenching action on various fluorescent substances, and demonstrate an effect that improves fluorescence brightness.

[Example 1]

Fluorescent particles were detected according to the scanning molecule counting method using KI for the triplet excited state quenching agent.

First, sample solutions were prepared by adding KI to 10 pM Alexa Fluor™ 488 (Invitrogen Corp.) to final concentrations of 0 mM, 0.1 mM, 0.3 mM, 1 mM, 3 mM, 10 mM and 30 mM. Each sample solution was measured according to the scanning molecule counting method using the MF20 Single Molecule Fluorescence Spectroscopy System (Olympus Corp.) equipped with a confocal fluorescent microscope optical system and photon counting system followed by acquisition of chronological photon count data. At that time, excitation light was radiated at 1 mW using laser light having a wavelength of 488 nm, and the detecting light wavelength was set to 510 nm to 560 nm using a band pass filter. The movement speed of the location of the photodetection region in the sample solutions was set to 15 mm/second, bin time was set to 10 μsec and measurement time was set to 2 seconds. In addition, each sample was measured five times followed by calculation of the mean and standard deviation thereof. Following measurement of light intensity, the number of light signals detected in the chronological data was counted from the chronological photon count data acquired for each sample solution. During data smoothing carried out according to the moving average method, nine data points were averaged at a time, and moving average processing was repeated five times. In addition, fitting was carried out on chronological data by fitting a Gaussian function according to the least squares method followed by determination of peak intensity (in the Gaussian function), peak width (full width at half maximum) and correlation coefficient. During peak judgment processing, although only those peak signals that satisfy the following conditions:

$$20 \ \mu sec < peak \ width < 400 \ \mu sec,$$

$$peak \ intensity > 1 \ (photons/10 \ \mu sec),$$

and

$$correlation \ coefficient > 0.95$$

were judged to be light signals corresponding to target particles, those peak signals that did not satisfy the aforementioned conditions were ignored as noise, and the number of signals judged to be light signals corresponding to target particles were counted as the "number of peaks".

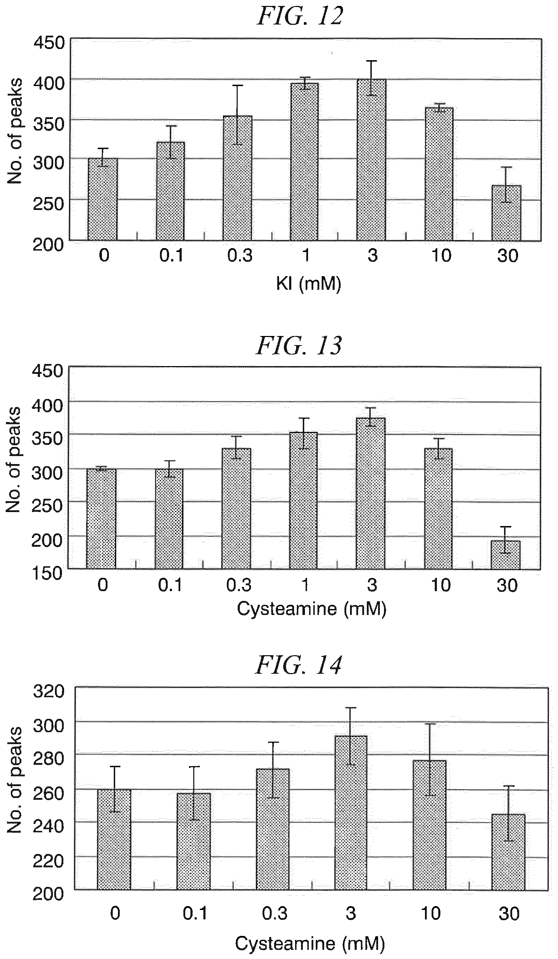

FIG. 12 is a drawing showing the results of counting the number of peaks of each sample solution. As a result, at KI concentrations of 0 . 1 mM to 10 mM, the number of peaks increased more than in the case of the sample solution to which KI was not added, thereby confirming that the ability to detect fluorescent particles improved. More specifically, at KI concentrations of 0.1 mM to 3 mM, the number of counted peaks increased as the amount of KI added increased. In the sample solution having a KI concentration of 3 mM for which the number of peaks was the greatest, the number of peaks increased by 30% or more in comparison with the sample solution to which KI was not added. This is presumed to be due to the additional detection of Alexa Fluor 488 for which fluorescence brightness was enhanced by KI.

On the basis of these results, the ability to detect fluorescent particles improved by counting fluorescent particles according to the scanning molecule counting method in the presence of KI, and fluorescent particles were clearly able to be detected with higher sensitivity.

[Example 2]

Fluorescent particles were detected according to the scanning molecule counting method using cysteamine for the triplet excited state quenching agent.

<Case of Alexa Fluor™ 488>

First, sample solutions were prepared by adding cysteamine to 10 pM Alexa Fluor™ 488 (Invitrogen Corp.) to final concentrations of 0 mM, 0.1 mM, 0.3 mM, 1 mM, 3 mM, 10 mM and 30 mM. Each sample solution was measured according to the scanning molecule counting method in the same manner as Example 1 followed by acquisition of chronological photon count data and counting of the number of fluorescent particles.

FIG. 13 is a drawing showing the results of counting the number of peaks of each sample solution. As a result, at cysteamine concentrations of 0.3 mM to 3 mM, the number of counted peaks increased as the amount of cysteamine added increased. In the sample solution having a cysteamine concentration of 3 mM for which the number of peaks was the greatest, the number of peaks increased by 20% or more in comparison with the sample solution to which KI was not added.

<Case of TAMRA™>

First, sample solutions were prepared by adding cysteamine to 10 pM TAMRA™ (AnaSpec Inc.) to final concentrations of 0 mM, 0. 1 mM, 0.3 mM, 3 mM, 10 mM and 30 mM. Each sample solution was measured according to the scanning molecule counting method in the same manner as Example 1 with the exception of radiating excitation light at 0 . 5 mW using laser light having a wavelength of 543 nm and setting the detecting light wavelength to 560 nm to 620 nm using a band pass filter, followed by acquisition of times series photon count data and counting the number of fluorescent particles.

FIG. 14 is a drawing showing the results of counting the number of peaks of each sample solution. As a result, at cysteamine concentrations of 0.3 mM to 3 mM, the number of counted peaks increased as the amount of cysteamine added increased. In the sample solution having a cysteamine concentration of 3 mM for which the number of peaks was the greatest, the number of peaks increased by 10% or more in comparison with the sample solution to which KI was not added.

On the basis of these results, the ability to detect fluorescent particles improved by counting fluorescent particles according to the scanning molecule counting method in the presence of cysteamine, and fluorescent particles were clearly able to be detected with higher sensitivity.

[Example 3]

An investigation was made of the relationship between fluorescent particle concentration and concentration of triplet excited state quenching agent having quenching action. More specifically, the concentration at which the triplet excited state quenching agent demonstrated quenching action was investigated in the case of fluorescent particle concentrations of 1 pM and 100 pM.

First, sample solutions were prepared by adding KI to 1 pM or 100 pM Alexa Fluor™ 488 (Invitrogen Corp.) to final concentrations of 0 mM, 0.1 mM, 0.3 mM, 1 mM, 3 mM, 10 mM and 30 mM. Each sample solution was measured according to the scanning molecule counting method in the same manner as Example 1 with the exception of using a measurement time of 20 seconds for sample solutions having an Alexa Fluor 488 concentration of 1 pM and using a measurement time of 2 seconds for sample solutions having an Alexa Fluor 488 concentration of 100 pM, followed by acquisition of chronological photon count data and counting the number of fluorescent particles.

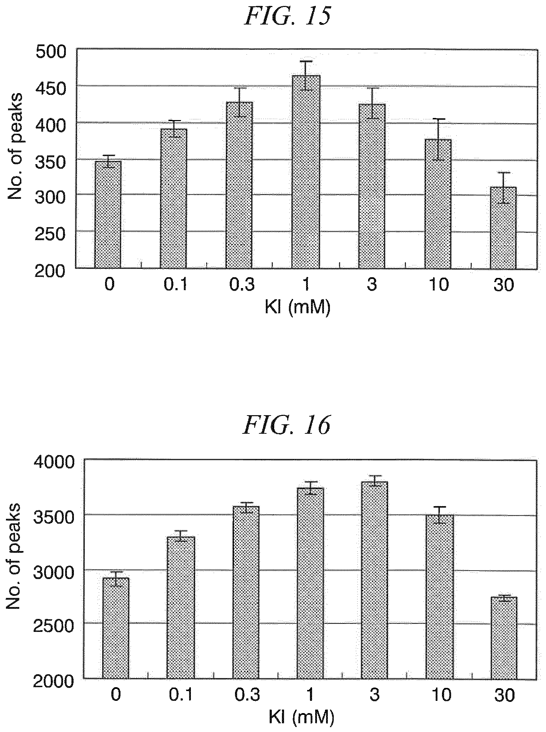

FIG. 15 is a drawing showing the results of counting the number of peaks of each sample solution having an Alexa Fluor 488 concentration of 1 pM, while FIG. 16 is a drawing showing the results of counting the number of peaks of each sample solution having an Alexa Fluor 488 concentration of 100 pM. In each of the sample solutions having an Alexa Fluor 488 concentration of 1 pM and sample solutions having an Alexa Fluor 488 concentration of 100 pM, the ability to detect peaks (ability to detect fluorescent particles) during measurement according to the scanning molecule counting method improved as a result of adding KI in the same manner as Example 1 (case of sample solution having an Alexa Fluor 488 concentration of 10 pM). In addition, since the number of detected peaks reached a maximum at KI concentrations of 1 mM to 3 mM in all cases, the concentration at which KI demonstrates quenching action was determined to not be significantly affected by the concentration of fluorescent particles, and fluorescent particles were determined to be able to be detected with higher sensitivity by adding KI to the sample solutions at a final concentration of 0.1 mM to 20 mM.

INDUSTRIAL APPLICABILITY

According to the method for detecting a fluorescent particle in a mode of the present invention, the concentration of target particles only present at an extremely low concentration in a sample solution can be measured according to a scanning molecule counting method with extremely high sensitivity. Consequently, the method for detecting a fluorescent particle in a mode of the present invention can be used in fields such as analysis and testing of samples such as clinical specimens in which the concentration of a substance to be analyzed is extremely low.

BRIEF DESCRIPTION OF THE REFERENCE SYMBOLS

| 1 | Optical analysis device (confocal microscope) |
|---|---|
| 2 | Light source |
| 3 | Single-mode optic fiber |
| 4 | Collimator lens |
| 5 | Dichroic mirror 6,7,11 Reflecting mirror |
| 8 | Object lens |
| 9 | Microplate |
| 10 | Well (sample solution container) |
| 12 | Condenser lens |
| 13 | Pinhole |
| 14 | Barrier filter |
| 15 | Multi-mode optic fiber |
| 16 | Photodetector |
| 17 | Mirror light deflector |
| 17a | Stage position adjustment device |
| 18 | Computer |

**Claims**

1. A method for detecting a fluorescent particle dispersed and moving randomly in a sample solution, comprising:

(a) a step for preparing a sample solution containing fluorescent particles, and
(b) a step for calculating the number density of molecules of fluorescent particles present in the sample solution prepared in step (a); wherein,

calculation of the number density of molecules of fluorescent particles in step (b) comprises:

a step for moving the location of a photodetection region (CV) of an optical system in the sample solution using the optical system of a confocal microscope (1) or multi-photon microscope, thereby obtaining a chronological light intensity data,
a step for individually detecting a fluorescent particle by detecting a light signal released from the fluorescent particle present in the photodetection region (CV) from radiative decaying from excited states other than the triplet state while moving the location of the photodetection region (CV) in the sample solution, and
a step for counting the number density of fluorescent particles detected during movement of the location of the photodetection region (CV) by counting the number of individually detected fluorescent particles and calculating the number density from this number, the size of the photo-detection region (CV) and the moving of its location, **characterized in that**
the step for preparing a sample solution containing fluorescent particles further includes the preparation of a substance that promotes transition of the fluorescent particles from a triplet excited state to a singlet ground state, and in the step for individually detecting fluorescent particles by detecting a light signal from the individual fluorescent particle, the entry of a single fluorescent particle into the photodetection region (CV) is detected based on the shape of the detected chronological light signal.

2. The method for detecting a fluorescent particle according to claim 1, wherein the concentration of the substance that promotes the transition from an excited triple state to a singlet ground state in the sample solution is 0.1 mM to 20 mM.

3. The method for detecting a fluorescent particle according to claim 1, wherein the concentration of the substance that promotes the transition from a triplet excited state to a singlet ground state in the sample solution is 0.3 mM to 10 mM.

4. The method for detecting a fluorescent particle according to claim 1, wherein the concentration of the substance that promotes the transition from a triplet excited state to a singlet ground state in the sample solution is 0.5 mM to 5 mM.

5. The method for detecting fluorescent particles according to any of claims 1 to 4, wherein the substance that promotes the transition from a triplet excited state to a singlet ground state is one or more types selected from potassium iodide and cysteamine.

6. The method for detecting a fluorescent particle according to any of claims 1 to 5, wherein the step for moving the location of the photodetection region (CV) comprises moving the location of the photodetection region (CV) at a prescribed speed.

7. The method for detecting a fluorescent particle according to any of claims 1 to 6, wherein the step for moving the location of the photodetection region (CV) comprises moving the location of the photodetection region (CV) at a speed faster than a diffusion movement speed of the fluorescent particle.

**Patentansprüche**

1. Verfahren zum Erfassen eines in einer Probelösung verteilten und sich willkürlich bewegenden fluoreszenten Partikels, umfassend

   (a) einen Schritt zum Zubereiten einer fluoreszente Partikel enthaltenden Probelösung, und
   (b) einen Schritt zum Berechnen der Anzahldichte von Molekülen von in der in Schritt (a) zubereiteten Probelösung vorhandenen fluoreszenten Partikeln; wobei

   die Berechnung der Anzahldichte von Molekülen von fluoreszenten Partikeln in Schritt (b) umfasst:

   einen Schritt zum Bewegen der Anordnung eines Fotodetektionsbereichs (CV) eines optischen Systems in der Probelösung mit dem optischen System eines konfokalen Mikroskops (1) oder Multi-Photonen-Mikroskops, wodurch chronologische Lichtstärkendaten ermittelt werden,
   einen Schritt zum einzelnen Erfassen eines fluoreszenten Partikels durch Erfassen eines vom im Fotodetektionsbereich (C) freigegebenen Lichtsignals aus dem Strahlungsabklingen von erregten Zuständen abweichend zum Triplettzustand, während die Anordnung des Fotodetektionsbereichs (CV) in der Probelösung bewegt wird, und
   einen Schritt zum Zählen der Anzahldichte von während der Bewegung der Anordnung des Fotodetektionsbereichs (CV) erfassten fluoreszenten Partikeln durch Zählen der Zahl von einzeln erfassten fluoreszenten Partikeln und Berechnen der Anzahldichte aus dieser Zahl, der Größe des Fotodetektionsbereichs (CV) und dem Bewegen von dessen Anordnung, **dadurch gekennzeichnet, dass**
   der Schritt zum Zubereiten einer fluoreszente Partikel enthaltenden Probelösung ferner die Zubereitung einer Substanz umfasst, die den Übergang der fluoreszenten Partikel von einem Triplett-Erregtzustand zu einem Singulett-Grundszuatnd fördert, und
   im Schritt zum einzelnen Erfassen von fluoreszenten Partikeln durch Erfassen eines Lichtsignals vom einzelnen fluoreszenten Partikel der Eintritt eines einzelnen fluoreszenten Partikels in den Fotodetektionsbereich (C) auf der Basis der Form des erfassten chronologischen Lichtsignals erfasst wird.

2. Verfahren zum Erfassen eines fluoreszenten Partikels nach Anspruch 1, wobei die Konzentration der Substanz, die den Übergang von einem erregten Tripelzustand zu einem Singulett-Grundzustand fördert, in der Probelösung 0,1 mM bis 20 nM beträgt.

3. Verfahren zum Erfassen eines filuoreszenten Partikels nach Anspruch 1, wobei die Konzentration der Substanz, die den Übergang von einem Triplett-Erregtzustand zu einem Singulett-Grundzustand fördert, in der Probelösung 0,3 mM bis 10 nM beträgt.

4. Verfahren zum Erfassen eines fluoreszenten Partikels nach Anspruch 1, wobei die Konzentration der Substanz, die den Übergang von einem Triplett-Erregtzustand zu einem Singulett-Grundzustand fördert, in der Probelösung 0,5 mM bis 5 nM beträgt.

5. Verfahren zum Erfassen von fluoreszenten Partikel nach einem der Ansprüche 1 bis 4, wobei die Substanz, die den Übergang von einem Triplett-Erregtzustand zu einem Singulett-Grundzustand fördert, Kaliumiodid und/oder Cysteamin ist.

6. Verfahren zum Erfassen eines fluoreszenten Partikels nach einem der Ansprüche 1 bis 5, wobei der Schritt zum Bewegen der Anordnung des Fotodetektionsbereichs (CV) das Bewegen der Anordnung des Fotodetektionsbereichs (C) mit einer vorgegebenen Geschwindigkeit umfasst.

7. Verfahren zum Erfassen eines fluoreszenten Partikels nach einem der Ansprüche 1 bis 6, wobei der Schritt zum Bewegen der Anordnung des Fotodetektionsbereichs (CV) das Bewegen der Anordnung des Fotodetektionsbereichs (C) mit einer Geschwindigkeit schneller als eine Diffusionsbewegungsgeschwindigkeit des fluoreszenten Partikels umfasst.

**Revendications**

1. Procédé pour détecter une particule fluorescente dispersée et se déplaçant de manière aléatoire dans une solution d'échantillon, comprenant :

   (a) une étape pour préparer une solution d'échantillon contenant des particules fluorescentes, et
   (b) une étape pour calculer la densité numérique de molécules de particules fluorescentes présentes dans la solution d'échantillon préparée dans l'étape (a) ; dans lequel,

   le calcul de la densité numérique de molécules de particules fluorescentes dans l'étape (b) comprend :

   une étape pour déplacer l'emplacement d'une région de photodétection (CV) d'un système optique dans la solution d'échantillon en utilisant le système optique d'un microscope confocal (1) ou d'un microscope multiphoton, obtenant ainsi des données d'intensité lumineuse chronologiques,

   une étape pour détecter individuellement une particule fluorescente en détectant un signal lumineux libéré par la particule fluorescente présente dans la région de photodétection (CV) à partir d'une décroissance radiative à partir d'états excités autres que l'état triplet, tout en déplaçant l'emplacement de la région de photodétection (CV) dans la solution d'échantillon, et
   une étape pour compter la densité numérique de particules fluorescentes détectées pendant le déplacement de l'emplacement de la région de photodétection (CV) en comptant le nombre de particules fluorescentes détectées individuellement et en calculant la densité numérique à partir de ce nombre, de la taille de la région de photodétection (CV) et du déplacement de son emplacement,
   **caractérisé par le fait que** :

   l'étape pour préparer une solution d'échantillon contenant des particules fluorescentes comprend en outre la préparation d'une substance qui favorise la transition des particules fluorescentes d'un état excité triplet à un état fondamental singulet, et
   dans l'étape pour détecter individuellement des particules fluorescentes en détectant un signal lumineux à partir de la particule fluorescente individuelle, l'entrée d'une unique particule fluorescente dans la région de photodétection (CV) est détectée sur la base de la forme du signal lumineux chronologique détecté.

2. Procédé pour détecter une particule fluorescente selon la revendication 1, dans lequel la concentration de la substance qui favorise la transition d'un état excité triplet à un état fondamental singulet dans la solution d'échantillon est comprise entre 0,1 mM et 20 mM.

3. Procédé pour détecter une particule fluorescente selon la revendication 1, dans lequel la concentration de la substance qui favorise la transition d'un état excité triplet à un état fondamental singulet dans la solution d'échantillon est comprise entre 0,3 mM et 10 mM.

4. Procédé pour détecter une particule fluorescente selon la revendication 1, dans lequel la concentration de la substance qui favorise la transition d'un état excité triplet à un état fondamental singulet dans la solution d'échantillon est comprise entre 0,5 mM et 5 mM.

5. Procédé pour détecter une particule fluorescente selon l'une quelconque des revendications 1 à 4, dans lequel la substance qui favorise la transition d'un état excité triplet à un état fondamental singulet est un ou plusieurs types choisis parmi l'iodure de potassium et la cystéamine.

6. Procédé pour détecter une particule fluorescente selon l'une quelconque des revendications 1 à 5, dans lequel l'étape pour déplacer l'emplacement de la région de photodétection (CV) comprend déplacer l'emplacement de la région de photodétection (CV) à une vitesse prescrite.

7. Procédé pour détecteur une particule fluorescente selon l'une quelconque des revendications 1 à 6, dans lequel l'étape pour déplacer l'emplacement de la région de photodétection (CV) comprend déplacer l'emplacement de la région de photodétection (CV) à une vitesse plus rapide qu'une vitesse du mouvement de diffusion de la particule fluorescente.

## FIG. 1A

## FIG. 1B

*FIG. 1C*

*FIG. 2A*

*FIG. 2B*

## FIG. 3A

Scanning direction

CV

Particle movement locus

Target particle

EX

## FIG. 3B

Photon count

Time →

## FIG. 4A

Scanning direction

CV    Ex

Particle movement locus

α

Particle movement locus

Fluorescent dye

β

Target particle

## FIG. 4B

Photon count

β    α

Time →

## FIG. 5

```
┌──────────────────────────────────────┐
│   Scanning molecule counting         │
│   method data analysis procedure     │
└──────────────────────────────────────┘
```

S100 — Acquisition of chronological light signal data, scanning of sample solution, photon counting

S110 — Smoothing processing of chronological light signal data

S120 — Time differentiation processing of chronological light signal data after smoothing

S130 — Detection of regions where peaks are present Detection of regions where peaks are present based on data derivatives

S140 — Fitting of bell-shaped function Fitting of bell-shaped function to smoothened chronological light signal data in regions where peaks are present → Calculation of bell-function parameters

S150 — Detection of presence of single particle Threshold-based judgment of bell-shaped function parameters Removal of noise

S160 — Counting of number of particles Output of bell-shaped function coefficient, etc.

To detection of next peak

S170 — Processing of all data completed ? — No

Yes

S180 — Calculation of concentration Other analyses

## *FIG. 6A*

## *FIG. 6B*

## FIG. 7

## FIG. 8A

## FIG. 8B

## FIG. 9A

## FIG. 9B

## FIG. 10A

FIG. 10B

FIG. 11A

FIG. 11B

## FIG. 12

## FIG. 13

## FIG. 14

## FIG. 15

## FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005098876 A
- JP 2008292371 A
- JP 4023523 B
- WO 2008080417 A
- JP 2007020565 A
- JP 2008116440 A
- JP H4337446 B
- US 2009159812 A1

### Non-patent literature cited in the description

- **KINJO, M.** *Proteins, Nucleic Acids and Enzymes,* 1999, vol. 44 (9), 1431-1438
- **MEYER-ALMS.** Fluorescence Correlation Spectroscopy. Springer, 2000, 204-224
- **KATOH, N. et al.** *Gene and Medicine,* 2002, vol. 6 (2), 271-277